(19) Europäisches Patentamt
European Patent Office
Office européen des brevets

(11) **EP 3 818 608 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **19736375.7**

(22) Anmeldetag: **04.07.2019**

(51) Internationale Patentklassifikation (IPC):
**H02J 3/24** (2006.01) **F03D 7/02** (2006.01)
**H02J 3/38** (2006.01)

(52) Gemeinsame Patentklassifikation (CPC):
**H02J 3/24; F03D 7/0284; F03D 7/048; H02J 3/381; H02J 3/48; H02J 3/50;** H02J 2300/28; Y02E 10/72; Y02E 10/76

(86) Internationale Anmeldenummer:
**PCT/EP2019/068023**

(87) Internationale Veröffentlichungsnummer:
**WO 2020/007995 (09.01.2020 Gazette 2020/02)**

(54) **VERFAHREN ZUM STEUERN EINES WINDPARKS ZUR DÄMPFUNG SUBSYNCHRONER SCHWINGUNGEN**

METHOD FOR CONTROLLING A WIND FARM IN ORDER TO DAMP SUBSYNCHRONOUS OSCILLATIONS

PROCÉDÉ POUR COMMANDER UN PARC ÉOLIEN DE MANIÈRE À ATTÉNUER DES OSCILLATIONS SOUS-SYNCHRONES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2018 DE 102018116443**

(43) Veröffentlichungstag der Anmeldung:
**12.05.2021 Patentblatt 2021/19**

(73) Patentinhaber: **Wobben Properties GmbH 26607 Aurich (DE)**

(72) Erfinder:
• **SCHWANKA TREVISAN, Aramis 26605 Aurich (DE)**
• **MENDONCA, Angelo 26382 Wilhelmshaven (DE)**
• **CASSOLI, Jair 26603 Aurich (DE)**
• **BROMBACH, Johannes 13437 Berlin (DE)**

(74) Vertreter: **Eisenführ Speiser Patentanwälte Rechtsanwälte PartGmbB Postfach 10 60 78 28060 Bremen (DE)**

(56) Entgegenhaltungen:
EP-A1- 3 322 060   WO-A1-2005/088802
WO-A1-2010/060451   WO-A1-2014/012789
CN-A- 105 515 018   DE-A1-102012 212 366
DE-A1-102016 101 468   US-A1- 2013 176 751

**Beschreibung**

Die vorliegende Erfindung betrifft ein Verfahren zum Steuern eines Windparks zum Bedämpfen niederfrequenter Schwingungen in einem elektrischen Versorgungsnetz. Zudem betrifft die vorliegende Erfindung einen Windpark mit mehreren Windenergieanlagen zum Bedämpfen niederfrequenter Schwingungen in einem elektrischen Versorgungsnetz.

Ein elektrisches Versorgungsnetz weist im Allgemeinen eine Netznennfrequenz von 50Hz oder 60Hz auf. Diese Netznennfrequenz kann auch als Systemfrequenz bezeichnet werden. Das elektrische Versorgungsnetz kann vereinfachend und synonym auch als Versorgungsnetz oder Netz bezeichnet werden.

In dem Versorgungsnetz können niederfrequente Schwingungen auftreten, die Frequenzen unterhalb der Netznennfrequenz aufweisen. Diese Schwingungen werden häufig als subsynchrone Resonanzen (SSR) bzw. subsynchrone Frequenzen bezeichnet. Dazu hat das Institute of Electrical and Electronics Engineers (IEEE) im Jahr 1990 eine Definition für subsynchrone Resonanz veröffentlicht, nämlich:

"Subsynchrone Resonanz ist ein elektrischer Systemzustand, in dem ein Energieaustausch zwischen einem elektrischen Netz und einem Generatorsatz bei einer oder mehreren Eigenfrequenzen des kombinierten Systems stattfindet, die unterhalb der synchronen Frequenz des Systems liegen", P.M. Anderson, B.L. Agrawal, J.E. Van Ness: "Subsynchronous Resonance in Power Systems", IEEE Press 1990

Ein Problem, das in einem Versorgungsnetz auftreten kann, ist, dass die niederfrequenten Schwingungen mechanische Schwingungen von direkt mit dem elektrischen Versorgungsnetz gekoppelten Synchrongeneratoren anregen bzw. verstärken können. Dadurch kann es zu Schäden an den Generatoren kommen. Werden diese zum Schutz vom elektrischen Versorgungsnetz getrennt, kann das zu einer Schwächung des elektrischen Versorgungsnetzes führen.

Es können auch niederfrequente Pendelschwingungen im Bereich von wenigen Herz im Versorgungsnetz zwischen Netzabschnitten auftreten, also zum Beispiel eine niederfrequente Schwingung zwischen einem ersten Netzabschnitt in Deutschland und einem zweiten Netzabschnitt in Frankreich. Solche Pendelschwingungen können im Versorgungsnetz auch zu partiellen Netzabschaltungen führen. Im ungünstigen Fall kann dies zu einem Blackout führen.

Dadurch, dass in vielen Ländern der Anteil an Großkraftwerken zurückgeht, während dezentrale, umrichterbasierte Erzeuger wie Windenergieanlagen oder Photovoltaikanlagen ersetzt werden, gewinnen solche dezentralen umrichterbasierten Erzeuger auch zum Stützen des elektrischen Versorgungnetzes an Bedeutung.

Dabei kann sich auch die Struktur des elektrischen Versorgungsnetzes ändern. Auch durch Zu- und Abschaltvorgänge, Wartungsarbeiten an Zuleitungen oder durch den Wettereinfluss, unterliegt das elektrische Versorgungsnetz ständigen Veränderungen. Dazu gehört auch, dass sich Netzkapazitäten und Netzinduktivitäten bzw. Netzimpedanzen insgesamt stetig ändern können. Dies führt dazu, dass sich auch die niederfrequenten Schwingungen, kontinuierlich ändern können, was deren Detektion und Bedämpfung schwierig gestaltet.

Da Windparks zunehmend einen Teil des elektrischen Versorgungsnetzes ausbilden und maßgeblich die Netzeigenschaften mitbestimmen, können diese somit zur Stabilisierung der Energiesysteme bzw. des Versorgungsnetzes beitragen und als Mittel zur Bedämpfung von ungewünschten subsynchronen Resonanzen eingesetzt werden. Aber auch solche Windparks müssen sich an die geänderten Netzeigenschaften in Bezug auf die niederfrequenten Schwingungen anpassen können.

Das Deutsche Patent- und Markenamt hat in der Prioritätsanmeldung zu vorliegender Anmeldung folgenden Stand der Technik recherchiert: DE 10 2013 208 410 A1, US 2013/0204557 A1, CN 105226679 A sowie den Artikel "Subsynchronous Oscillation Detection using Phasor Measurements and Synchrosqueezing Transform von Miao He et al.

Das Europäische Patentamt hat zur vorliegenden Anmeldung folgenden Stand der Technik recherchiert: US 2013/176751 A1, WO 2005/088802 A1, WO 2010/060451 A1, DE 10 2012 212 366 A1, EP 3 322 060 A1, CN 105 515 018 A, DE 10 2016 101 468 A1 und WO 2014/012789 A1. Das Dokument US 2013/176751 A1 betrifft eine Vorrichtung und ein Verfahren zur Steuerung eines Frequenzumrichters einer Windenergieanlage, wobei der Frequenzumrichter so gesteuert werden soll, das subsynchrone Resonanzen im Stromnetz reduziert werden. Das Dokument WO 2005/088802 A1 betrifft eine Einrichtung zur Prävention von Großstörungen in elektrischen Versorgungsnetzen. Das Dokument WO 2010/060451 A1 betrifft ein Verfahren und eine Anordnung zum Erzeugen eines Störungskategorisierungssignals in einem Energieerzeugungsnetz. Das Dokument DE 10 2012 212 366 A1 betrifft ein Verfahren zum Steuern eines Windparks, bei dem nach einem Schwarzfall des Netzes die Leistung rampenförmig auf ein vorgebbares Leistungsniveau gefahren wird, das niedriger ist als vor dem Schwarzfall. Das Dokument EP 3 322 060 A1 betrifft ein Verfahren zum Bedämpfen elektromechanischer Oszillationen in einem Leistungssystem. Das Dokument CN 105 515 018 A betrifft eine Windkraft-Subsynchronoszillationserkennung und eine Hemmungsmethode, die auf einer empirischen Modenzersetzung basiert. Das Dokument DE 10 2016 010 468 A1 betrifft ein Einspeiseverfahren mittels wenigstens einer Windenergieanlage, bei dem ein Referenzsystem der Netzspannung verzögert nachgeführt wird. Das Dokument WO 2014012789 A1 betrifft ein Verfahren zum Steuern eines Windparks, der bei einem kleinen Kurzschlussstromverhältnis angeschlossen und stabil betrieben werden kann, indem ein Stabilitätskriterium eingehalten wird, dass von der Wirkleistung und/oder von der Blindleistung abhängig ist.

Aufgabe der vorliegenden Erfindung ist es somit, zumindest eines der oben genannten Probleme zu adressieren. Insbesondere soll eine Lösung vorgeschlagen werden, die zumindest eine dämpfende Wirkung eines Windparks auf niederfrequente Schwingungen im elektrischen Versorgungsnetz ermöglicht oder verbessert. Zumindest soll zu bisher bekannten Lösungen eine alternative Lösung vorgeschlagen werden.

Erfindungsgemäß wird dazu ein Verfahren gemäß Anspruch 1 vorgeschlagen. Es dient zum Steuern eines Windparks zum Bedämpfen niederfrequenter Schwingungen, insbesondere subsynchroner Resonanzen, in einem elektrischen Versorgungsnetz. Demnach geht die Erfindung von einem Windpark mit mehreren Windenergieanlagen aus, die elektrisch zu einem Windpark zusammengeschaltet sind und einen Teil des elektrischen Versorgungsnetzes ausbilden. Der hierbei beschriebene Windpark kann auch repräsentativ für eine einzelne Windenergieanlage oder für zwei oder mehr Windparks stehen. Nachfolgende Erläuterungen zum Windpark betreffen sinngemäß auch eine einzelne Windenergieanlage. Der Windpark ist dabei in einem Normalbetrieb elektrisch mit dem Versorgungsnetz über einen Netzanschlusspunkt verbunden und speist elektrische Leistung in das elektrische Versorgungsnetz ein.

Zudem weist das Versorgungsnetz eine Netzspannung mit einer Netznennfrequenz auf. Die Netznennfrequenz beträgt üblicherweise 50 Hz oder 60 Hz. Die zu bedämpfenden niederfrequenten Schwingungen weisen besonders eine geringere Frequenz auf als die Netznennfrequenz, nämlich bspw. weniger als die halbe Netznennfrequenz. Die niederfrequenten Schwingungen sind demnach kleiner als 25 Hz bzw. 30 Hz. Beispiele für charakteristische Frequenzbereiche niederfrequenter Schwingungen, die auch als *"Power System Oscillations"* bekannt sind, sind dabei Frequenzbereiche von etwa 0,2-3 Hz oder 5-15 Hz, um nur zwei von vielen Beispielen zu nennen.

Besonders können die niederfrequenten Schwingungen Werte von 1 Hz und weniger aufweisen. Sie können aber auch bis zum fünffachen Wert der Netznennfrequenz reichen. Als niederfrequente Schwingungen werden hier Schwingungen mit einer Frequenz von maximal dem fünffachen Wert der Netznennfrequenz bezeichnet, vorzugsweise mit einer Frequenz die maximal der Netznennfrequenz entspricht. Besonders weist die niederfrequente Schwingung keine Frequenz auf, die einem Vielfachen der Netznennfrequenz entspricht. Es ist zu beachten, dass die Untersuchung und Berücksichtigung niederfrequenter Schwingungen besonders der Untersuchung oder dem Sicherstellen einer Systemstabilität des elektrischen Versorgungsnetzes dient. Das grenzt sich von einer Beurteilung der Netzqualität bzw. Signalqualität des Spannungssignals im elektrischen Versorgungsnetz ab, bei der es besonders auf Oberwellen ankommt.

Zunächst wird eine niederfrequente elektrische Schwingung des elektrischen Versorgungsnetzes erfasst. Dazu kann bspw. die Netzspannung an einem Netzanschlusspunkt, an dem die Windenergieanlage bzw. der Windpark in das elektrische Versorgungsnetz einspeist, gemessen und ausgewertet werden. Bspw. kann die so gemessene Netzspannung mit einem Tiefpassfilter gefiltert werden, der nur Frequenzen unterhalb der Netzfrequenz durchlässt. Die gemessene Netzspannung bzw. die gefilterte Netzspannung, um bei dem Beispiel zu bleiben, kann auch als Schwingungssignal bezeichnet und betrachtet werden, dass Informationen über die erfasste bzw. zu erfassende Schwingung enthält.

Die Schwingung, und damit auch das beschreibende Schwingungssignal, weist eine Schwingungsfrequenz auf, die auch als charakteristische Frequenz oder als Frequenz der niederfrequenten Schwingung bezeichnet werden kann. Die Schwingung wird aber auch durch andere Merkmale gekennzeichnet und weist dabei eine Schwingungscharakteristik auf. Zu solchen Merkmalen gehört eine Amplitude der Schwingung, insbesondere ob und wie diese Amplitude schwingt. Auch kleine Variationen der Frequenz können ein kennzeichnendes Merkmal sein. Auch eine Kombination solcher Merkmale kommt in Betracht.

Besonders wichtig ist, dass die Schwingungen davon abhängig und/oder abhängig anderer kennzeichnender Merkmale klassifiziert werden können.

Die Schwingungscharakteristik der erfassten Schwingung umfasst wenigstens eines dieser oder anderer Merkmale. Dazu gehört auch die Klassifizierung der Schwingung.

Es wird nun auch vorgeschlagen, eine solche Schwingungscharakteristik der erfassten Schwingung zu bestimmen, wobei die Schwingungscharakteristik also wenigstens eine Eigenschaft der erfassten Schwingung beschreibt.

Die Schwingungscharakteristik kann dabei auch charakteristische Informationen der niederfrequenten Schwingung umfassen, wobei die Informationen direkt durch Messungen bestimmt bzw. erfasst werden können, oder indirekt aus einer durchgeführten Analyse oder Auswertung hervorgehen können. Weitere Eigenschaften der erfassten Schwingung können eine Schwingungsart sein, die die Schwingung klassifiziert, oder ein Ort an dem die niederfrequente Schwingung erfasst wurde. Die Schwingungsart oder andere Klassifizierung kann ein Ergebnis einer durchgeführten Analyse der erfassten Schwingung bzw. des erfassten Schwingungssignals sein.

Dabei beschreibt die Schwingungsart eine Art bzw. eine Schwingungskategorie von erfassten niederfrequenten Schwingungen, wobei besonders unterschieden wird zwischen den Schwingungsarten

- Intraplant-Schwingungen, die Schwingungen zwischen mehreren an das elektrische Versorgungsnetz angeschlossenen Erzeugungseinheiten in einem Versorgungsnetzabschnitt bezeichnen,

- Control-Mode-Schwingungen, die Schwingungen bedingt durch rückkoppelndes Regeln von an das elektrische Versorgungsnetz angeschlossenen Erzeugungseinheiten, Verbrauchereinheiten oder Wandlereinheiten bezeichnen,

- Interarea-Schwingungen, die Schwingungen zwischen mehreren Versorgungsnetzabschnitten bezeichnen, und

- Localplant-Schwingungen, die Schwingungen zwischen einer an das elektrische Versorgungsnetz angeschlossenen Erzeugungseinheit mit dem Versorgungsnetz bezeichnen.

Das Bestimmen der Schwingungscharakteristik erfolgt bevorzugt aus wenigstens einer Messung einer Netzspannung des elektrischen Versorgungsnetzes. Besonders wird hier zur Erfassung der Schwingungscharakteristik eine Spannungsmessung beispielsweise am Netzanschlusspunkt vorgeschlagen, an dem eine Windenergieanlage oder ein Windpark in das elektrische Versorgungsnetz einspeist. Vorzugsweise wird hier eine dreiphasige Messung vorgenommen, wenn das elektrische Versorgungsnetz - wovon üblicherweise auszugehen ist - ein dreiphasiges elektrisches Versorgungsnetz ist. Die wenigstens eine Messung wird also ausgewertet, um eine niederfrequente Schwingung im elektrischen Versorgungsnetz zu erkennen bzw. zu charakterisieren. Hierzu kann eine Erkennungseinrichtung vorgesehen sein, die die Netzspannung erfasst und anschließend auswertet.

Die Ergebnisse der Messung und Auswertungen, oder ein Teil davon, werden anschließend als Schwingungscharakteristik zusammengefasst bzw. bereitgestellt, insbesondere einer oder mehreren Steuereinheiten bereitgestellt, die die Windenergieanlagen bzw. den Windparks ansteuern. Die Schwingungscharakteristik umfasst demnach Messwerte sowie Ergebnisse wenigstens einer Analyse bzw. Auswertung einer oder mehrere Spannungsmessungen, um eine niederfrequente Schwingung bzw. das niederfrequente Schwingungssignal und zu charakterisieren.

Als weiterer Schritt wird vorgeschlagen, dass ein Vorgeben eines Wirkleistungsdämpfungssignals (ΔP) bzw. eines Blindleistungsdämpfungssignals (ΔQ) jeweils zum Bedämpfen der durch die Schwingungscharakteristik charakterisierten niederfrequenten Schwingungen erfolgt.

Das Vorgeben des Wirkleistungsdämpfungssignals (ΔP) bzw. des Blindleistungsdämpfungssignals (ΔQ) erfolgt somit in Abhängigkeit der erfassten Schwingungscharakteristik bzw. in Abhängigkeit der erfassten niederfrequenten Schwingung, die über die Schwingungscharakteristik charakterisiert wird. Nachdem die niederfrequente Schwingung erfasst wurde, wird ein entsprechendes Dämpfungssignal für die Wirk- bzw. Blindleistung generiert. Dieses wird anschließend einer Steuerung in der Windenergieanlage oder im Windpark vorgegeben. In einer besonderen Ausführungsform wird vorgeschlagen, dass das Wirkleistungsdämpfungssignals (ΔP) bzw. des Blindleistungsdämpfungssignals (ΔQ) einer FACTS-Steuerung vorgegeben wird, wobei die FACTS-Steuerung einen Umrichter einer Windenergieanlage ansteuert.

Als weiterer Schritt wird vorgeschlagen, dass das Einspeisen eines Wirkleistungsanteils entsprechend des Wirkleistungsdämpfungssignals bzw. eines Blindleistungsanteils entsprechend des Blindleistungsdämpfungssignals durchgeführt wird. Dabei erfolgt das Vorgeben des Wirkleistungsdämpfungssignals (ΔP) bzw. des Blindleistungsdämpfungssignals (ΔQ) in Abhängigkeit der charakteristischen Frequenz der bestimmten Schwingungscharakteristik. Das Verfahren kann zum Bedämpfen einer erfassten Schwingung oder mehrerer erfasster Schwingungen erfolgen. Wenn mehrere Schwingungen bedämpft werden sollen, wird vorzugsweise für jede Schwingung einzeln eine Schwingungscharakteristik bestimmt und wenigstens ein Dämpfungssignal vorgegeben. Die Dämpfungssignale können dann zusammengefasst werden, zumindest die Wirkleistungsdämpfungssignale und die Blindleistungsdämpfungssignale, um als gemeinsames Dämpfungssignal eingespeist zu werden. Es kommt aber auch in Betracht, ein Wirkleistungsdämpfungssignal und ein Blindleistungsdämpfungssignal jeweils für mehrere Schwingungscharakteristika zusammen vorzugeben.

Es wird somit vorgeschlagen, dass die Windenergieanlage bzw. der Windpark eine Wirkleistung bzw. eine Blindleistung in das elektrische Versorgungsnetz einspeist, um die erfassten niederfrequenten Schwingungen zu bedämpfen. Die Einspeisung, die bei einer Windenergieanlage mit einem Umrichter erfolgt, wird dabei in Abhängigkeit des vorgegebenen Wirkleistungsdämpfungssignals (ΔP) und/oder des Blindleistungsdämpfungssignals (ΔQ) eingespeist. Diese können auch als Sollwerte oder Sollwertsignale für den Windpark bzw. die Windenergieanlage aufgefasst werden.

Gemäß einer weiteren Ausführungsform wird vorgeschlagen, dass das Einspeisen des Wirkleistung- und/oder Blindleistungsanteils in das elektrische Netz so erfolgt, dass Lastflüsse im Versorgungsnetz geändert werden, um das elektrische Versorgungsnetz in einen anderen Arbeitspunkt bzw. geänderten Lastflusszustand zu verschieben. Das elektrische Versorgungsnetz weist einen Arbeitspunkt auf, der durch Lastflüsse gekennzeichnet ist. Dieser wird somit in Abhängigkeit der erfassten niederfrequenten Schwingung verändert, besonders verschoben, so dass besonders ein anderer, insbesondere stabileren, Arbeitspunkt erreicht wird, der besonders auf die niederfrequenten Schwingungen dämpfend wirkt. Somit kann der Windpark als ein Mittel zur Bedämpfung von niederfrequenten Schwingungen in einem elektrischen Versorgungsnetz genutzt werden.

Wird zum Beispiel in einem vermaschten Netz eine geänderte Blindleistungseinspeisung vorgenommen, kann ein Lastfluss in einem ersten Netzabschnitt verändert werden, an dem der Windpark angeschlossen ist. Der geänderte Lastfluss im ersten Netzabschluss kann wiederum dazu führen, dass sich ebenfalls ein geänderter Lastfluss in einem anderen zweiten Netzabschnitt einstellt, der mit dem ersten Netzabschnitt gekoppelt ist. Demnach ändert sich der Zustand der Lastflüsse im Netz durch die Einspeisung des Windparks. Dies kann somit genutzt werden, um eine auftretende niederfrequente Schwingung zu bedämpfen.

Vorzugsweise wird vorgeschlagen, dass als ein zusätzlicher Verfahrensschritt ein Bestimmen einer Netzcharakteristik erfolgt, die einen Aufbau des elektrischen Versorgungsnetzes charakterisiert. Dabei erfolgt das Vorgeben des Wirkleistungsdämpfungssignals ($\Delta$P) bzw. des Blindleistungsdämpfungssignals ($\Delta$Q) zusätzlich in Abhängigkeit der bestimmten Netzcharakteristik.

Besonders wurde erkannt, dass der Aufbau des elektrischen Versorgungsnetzes einen unmittelbaren Einfluss auf die niederfrequenten Schwingungen hat und somit für eine effektive Bedämpfung zu berücksichtigen ist. Es hat sich insbesondere gezeigt, dass eine Dämpfung mit einer Windenergieanlage bzw. einem Windpark generell möglich ist, aber die Reaktion auf die geänderte Einspeisung der niederfrequenten Schwingung von der vorherrschenden Netztopologie am Netzverknüpfungspunkt abhängig ist. Relevant sind dabei insbesondere die Größe und Entfernung vorhandener direkt mit dem elektrischen Versorgungsnetz gekoppelter Synchronmaschinen, besonders wegen ihrer direkt das elektrische Versorgungsnetz beeinflussender Schwungmassen, oder ein Umrichteranteil im Netz, der angibt, wie groß der durch umrichtergeführte Erzeuger oder Einspeiser eingespeiste Anteil elektrischer Leistung bezogen auf eine insgesamt eingespeiste elektrische Leistung ist. Ebenfalls relevant sind der Aufbau und Ausdehnung des elektrischen Versorgungsnetzes, Impedanzen zwischen den zuvor genannten direkt gekoppelten Synchrongeneratoren, besonders im Hinblick auf ihre Schwungmassen, im Versorgungsnetz sowie eine Impedanz zwischen den Windenergieanlagen und einem Netzschwerpunkt, wie einem Stadtgebiet. Es kann dabei vorkommen, dass ein Netzabschnitt, an den eine Vielzahl von Erzeuger mit Umrichtern angeschlossen ist, eine andere Leistungseinspeisung zum Bedämpfen niederfrequenter Schwingungen benötigt, als ein Netzabschnitt mit wenigen umrichtergeführten Erzeugern bzw. Einspeisern. Dies kann mittels der Netzcharakteristik berücksichtigt werden. Hierzu kann analog zur Schwingungscharakteristik für die Netzcharakteristik eine Erkennungseinrichtung zum Bestimmen der Netzcharakteristik vorgesehen sein, die die erfasste Netzcharakteristik einer Steuerung des Windparks bereitstellen kann. Zusätzlich oder alternativ kann die Netzcharakteristik auch im Vorfeld bestimmt und im Windpark implementiert sein, insbesondere in der Erkennungseinrichtung der niederfrequenten Schwingungen. Es kommt auch in Betracht, dass ein Netzbetreiber, der das elektrische Versorgungsnetz bzw. einen Teil davon betreibt, solche Informationen überträgt.

Gemäß einer Ausgestaltung kann die Netzcharakteristik bzw. wenigstens eine relevante Eigenschaft der Netzcharakteristik einen Teil der Schwingungscharakteristik bilden oder zumindest bei ihrer Bestimmung Berücksichtigung finden. Bspw. kann berücksichtigt werden, ob benachbarte Erzeugungseinheiten gerade einspeisen, oder nicht, oder ob sie sich in einem bestimmten Modus befinden, in dem bspw. eine Systemdienstleistung erbracht wird. Besonders bei großen benachbarten Erzeugungseinheiten kann das die Netzcharakteristik beeinflussen und somit selbst als Systemeigenschaft eingehen.

Vorzugsweise wird vorgeschlagen, dass das Bestimmen einer Schwingungscharakteristik ein Bestimmen Schwingungsart beinhaltet, wobei unterschieden wird zwischen den zuvor beschriebenen Schwingungsarten bzw. Schwingungskategorien Intraplant-Schwingungen, Control-Mode-Schwingungen, Interarea-Schwingungen, und Localplant-Schwingungen.

Besonders wird hier also vorgeschlagen, die jeweilige Schwingungsart der erfassten niederfrequenten Schwingung im elektrischen Netz zu berücksichtigen, um eine daran angepasst Einspeisung vorzunehmen. Die Schwingungsart wird dabei besonders durch eine Auswertung bzw. Analyse der Netzspannung ermittelt. Es wurde erkannt, dass ein Bedämpfen niederfrequenter Schwingungen in Abhängigkeit der Schwingungsart unterschiedlich über die Wirk- bzw. Blindleistungseinspeisung beeinflusst werden kann. Durch diese Charakteristik bzw. Klassifizierung der Schwingungsart kann gezielt auf die Schwingung eingewirkt werden. Besonders liegt hier die Erkenntnis zu Grunde, dass durch eine solche Klassifizierung auch besser die Ursache der jeweiligen Schwingung berücksichtigt werden kann.

Liegt bspw. eine Localplant-Schwingung vor, so ist diese auch meist lokal beschränkt und kann gezielter bedämpft werden, indem bspw. ein Blindleistungsdämpfungssignal in der Nähe ein gespeist wird, um dadurch die Spannung an einem relevanten Netzabschnitt, zu verändern und dadurch dort einen Leistungsfluss zu beeinflussen und dadurch die Localplant-Schwingung zu bedämpfen.

Liegt aber, um ein weiteres Beispiel zu nennen, eine Interarea-Schwingung vor, so können weiträumige Leistungsschwingungen vorliegen, bei denen Leistungen bzw. Energiemengen zwischen großen Netzbereichen hin- und herschwingen. Hier könnte ein Wirkleistungsdämpfungssignal gezielt Wirkleistung dort und dann einspeisen, wo und wann durch die Schwingung gerade ein Leistungsdefizit vorhanden ist. Zusätzlich könnte die Netztopologie eine Rolle spielen und es wäre bspw. das Einspeisen eines Blindleistungsdämpfungssignals zu ergänzen, das zu Spannungsänderungen in Netzabschnitten führen kann und dadurch den Leistungsfluss zwischen den Netzabschnitten beeinflussen kann.

Vorzugsweise wird vorgeschlagen, dass das Wirkleistungsdämpfungssignal ($\Delta$P) und das Blindleistungsdämpfungssignal ($\Delta$Q) unabhängig voneinander vorgegeben werden und der eingespeiste Wirkleistungsanteil bzw. der eingespeiste Blindleistungsanteil so eingespeist werden, dass unterschiedliche niederfrequente Schwingungsarten unabhängig voneinander bedämpft werden.

Ein solches unabhängiges Vorgeben des Wirkleistungsdämpfungssignals bzw. des Blindleistungsdämpfungssignals kann dabei so erfolgen, dass zwei getrennte Sollwerte (ΔP, ΔQ) jeweils für den einzuspeisenden Wirk- bzw. Blindleistungsanteil, einer Steuerung der Windenergieanlage vorgegeben werden.

Bevorzugt wird vorgeschlagen, dass das Wirkleistungsdämpfungssignal durch eine Wirkleistungsdämpfungsfunktion gebildet wird, die wenigstens eine erste Eigenschaft der Schwingungscharakteristik als Eingangssignal erhält und das Wirkleistungsdämpfungssignal als Ausgangssignal ausgibt, und dass das Blindleistungsdämpfungssignal durch eine Blindleistungsdämpfungsfunktion gebildet wird, die wenigstens eine zweite Eigenschaft der Schwingungscharakteristik als Eingangssignal erhält und das Blindleistungsdämpfungssignal als Ausgangssignal ausgibt. Es werden somit für die beiden Dämpfungssignale unterschiedliche Funktionen für ihre Bestimmung vorgesehen, nämlich besonders jeweils ein eigener Funktionsblock, wobei jeder der beiden Funktionsblöcke unterschiedliche Eingangs- und Ausgangsgrößen erhält bzw. ausgibt.

Bspw. kann die erste Eigenschaft der Schwingungscharakteristik eine Schwingungsfrequenz oder eine Veränderung der Schwingungsfrequenz sein, die dann in die Wirkleistungsdämpfungsfunktion eingegeben wird und aus der, ggf. unter Berücksichtigung weiterer Informationen, die Wirkleistungsdämpfungsfunktion gebildet wird, insbesondere durch einen Mikroprozessor berechnet wird.

Als weiteres Beispiel kann die zweite Eigenschaft der Schwingungscharakteristik eine Schwingungsamplitude oder eine Veränderung der Schwingungsamplitude sein, die dann in die Blindleistungsdämpfungsfunktion eingegeben wird und aus der, ggf. unter Berücksichtigung weiterer Informationen, die Blindleistungsdämpfungsfunktion gebildet wird, insbesondere durch einen Mikroprozessor berechnet wird.

Zusätzlich oder alternativ wird vorgeschlagen, dass das Wirkleistungsdämpfungssignal (ΔP) bzw. das Blindleistungsdämpfungssignal (ΔQ) unabhängig von einem Wirkleistungssollwertsignal bzw. Blindleistungssollwertsignal ($P_{FCU}$, $Q_{FCU}$) eines Windparkreglers vorgegeben wird. Dafür ist besonders eine zusätzliche Steuereinheit vorgesehen. Diese kann parallel zu einer Windparksteuereinheit geschaltet sein und dazu eingerichtet sein, Sollwerte für den Wirk- und Blindleistungsanteil unabhängig von einer Windparksteuerung vorzugeben. Dabei kann die Steuereinheit in der Erkennungseinrichtung implementiert sein. Vorteilhaft daran ist besonders, dass die Sollwerte (ΔP, ΔQ) für den einzuspeisenden Wirk- bzw. Blindleistungsanteil von der Windparksteuerung entkoppelt sind und kein Eingriff in die Windparksteuerung erfolgen muss.

In einer besonderen Ausführungsform wird vorgeschlagen, dass das Wirkleistungsdämpfungssignal (ΔP) mit dem Wirkleistungssollwertsignal sowie das Blindleistungsdämpfungssignal (ΔQ) mit dem Blindleistungssollwertsignal jeweils zu einem Gesamtsignal überlagert und einer FACTS-Steuerung wenigstens einer Windenergieanlage vorgegeben werden.

Gemäß einer Ausgestaltung wird vorgeschlagen, dass das Wirkleistungsdämpfungssignal und/oder das Blindleistungsdämpfungssignal so vorgegeben werden, und entsprechend der Wirkleistungsanteil bzw. Blindleistungsanteil so eingespeist werden, dass sich ein Arbeitspunkt des elektrischen Versorgungsnetzes so verschiebt, dass wenigstens eine der erfassten niederfrequenten elektrischen Schwingungen verringert oder vermieden wird. Hier liegt besonders der Gedanke zu Grunde, dass das elektrische Versorgungsnetz dynamisch sein kann und seine Schwingeigenschaft oder Schwingneigung dabei vom aktuellen Arbeitspunkt abhängen kann. Durch Verschieben des Arbeitspunktes kann somit auf die Schwingeigenschaft bzw. Schwingneigung Einfluss genommen werden.

Vorzugsweise wird vorgeschlagen, dass das Bestimmen einer Schwingungscharakteristik mittels einer FFT-Analyse durchgeführt wird. Auch wird zusätzlich oder alternativ vorgeschlagen, dass das Bestimmen einer Schwingungscharakteristik mittels einer Wavelet-Analyse durchgeführt wird. Zudem wird zusätzlich oder alternativ vorgeschlagen, dass das Bestimmen einer Schwingungscharakteristik mittels einer Gradienten-Analyse durchgeführt wird.

Gemäß einer Ausführungsform wird vorgeschlagen, dass

- das Wirkleistungsdämpfungssignal als ein moduliertes Signal vorgegeben wird, während das Blindleistungsdämpfungssignal als konstantes Signal vorgegeben wird, oder dass

- das Blindleistungsdämpfungssignal als ein moduliertes Signal vorgegeben wird, während das Wirkleistungsdämpfungssignal als konstantes Signal vorgegeben wird.

Hierdurch werden besonders zwei unabhängige Regelungseingriffe ermöglicht, bei denen das Wirkleistungsdämpfungssignal und das Blindleistungsdämpfungssignal gänzlich unterschiedlich zueinander vorgegeben werden, nämlich selbst der Art nach. Dabei ist unter einem modulierten Signal besonders ein Signal zu verstehen, das frequenzmoduliert wird, bspw. mit einer Frequenz von 1 Hz. Das Signal oszilliert somit und diese Oszillation wird durch eine Modulation erreicht. Bspw. kann damit gezielt gegen eine niederfrequente Schwingung gegengesteuert werden, wenn dem modulierten Signal dieselbe Frequenz aufmoduliert wird, die die niederfrequente Schwingung aufweist. Bei der Modulation ist dann auch auf diese Phasenlage zu achten, so dass die niederfrequente Schwingung bedämpft und nicht noch angeregt wird.

Es kommt aber auch eine nicht oder nicht ideal sinusförmige Signalform für das modulierte Signal in Betracht. Das andere Dämpfungssignal wird nicht moduliert und weist im Grunde nur einen konstanten Wert auf, also einen konstanten Wirkleistungswert, bzw. einen konstanten Blindleistungswert.

Gemäß einer Ausgestaltung wird vorgeschlagen, dass

- zum Erfassen wenigstens einer niederfrequenten elektrischen Schwingung des elektrischen Versorgungsnetzes, und/oder
- zum Bestimmen jeweils einer Schwingungscharakteristik der wenigstens einen erfassten Schwingung, folgende Schritte vorgesehen sind:
- Erfassen wenigstens eines elektrischen Signals des elektrischen Versorgungsnetzes und
- Auswerten des elektrischen Signals mittels einer Wavelet-Analyse, bei der über eine Korellationsanalyse des erfassten Signals mit einer vorbestimmten Wavelet-Mutterfunktion ein zeitabhängiges Frequenzbild erstellt wird,
- wobei vorzugsweise vom Vorliegen einer niederfrequenten Schwingung ausgegangen wird, wenn
- in dem zeitabhängigen Frequenzbild zusätzlich zu einem Grundanteil wenigstens ein weiterer niederfrequenter Frequenzanteil vorhanden ist.

Das Verfahren umfasst nun zunächst den Schritt, wenigstens ein elektrisches Signal des elektrischen Versorgungsnetzes zu erfassen. Besonders wird hier eine Spannungsmessung beispielsweise am Netzanschlusspunkt vorgeschlagen, an dem eine Windenergieanlage oder ein Windpark in das elektrische Versorgungsnetz einspeist. Vorzugsweise wird hier eine dreiphasige Messung vorgenommen, wenn das elektrische Versorgungsnetz - wovon üblicherweise auszugehen ist - ein dreiphasiges elektrisches Versorgungsnetz ist.

Das Auswerten des elektrischen Signals erfolgt dann mittels einer Wavelet-Analyse. Eine Wavelet-Analyse ist dem Grunde nach bekannt und insoweit wird auf entsprechende Fachliteratur bzw. das Fachwissen des Fachmanns dazu verwiesen. Hier wird nun aber vorgeschlagen, diese Wavelet-Analyse zum Auswerten des elektrischen Signals zu verwenden, um niederfrequente Schwingungen zu erkennen.

Bei der vorgeschlagenen Wavelet-Analyse wird ein zeitabhängiges Frequenzbild erstellt. Das erfolgt über eine Korrelationsanalyse des erfassten Signals mit einer vorbestimmten Wavelet-Mutterfunktion. Diese Wavelet-Mutterfunktion wird also vorbestimmt, kann also vorgegeben werden. Sie kann dabei beispielsweise fest vorgegeben sein und hinterlegt sein, oder es kommen auch Veränderungen der Wavelet-Mutterfunktion in Betracht. Es kommt auch in Betracht, mehrere Analysen jeweils durchzuführen, wobei die Analysen jeweils unterschiedliche Wavelet-Mutterfunktionen verwenden.

Jedenfalls ergibt sich bei der Korrelationsanalyse des erfassten Signals mit der vorbestimmten Wavelet-Mutterfunktion ein zeitabhängiges Frequenzbild. In dem zeitabhängigen Frequenzbild werden somit über die Zeit Frequenzen aufgetragen. Beispielsweise kann zur Visualisierung ein Diagramm verwendet werden, das die Abszisse als Zeitachse verwendet und als Ordinate Frequenzwerte aufträgt. Die Werte werden aber nicht als Einzelwerte aufgetragen, sondern vielmehr im Sinne einer Dichte ihres Auftretens, indem beispielsweise eine prozentuale Energie über einen Farbcode zugeordnet werden kann.

Das ist besonders eine grafische Darstellungsart, aber die einer solchen grafischen Darstellung zu Grunde liegenden Informationen können auch als Werte oder Wertemenge in einem Prozessrechner weiter ausgewertet werden, auch ohne visualisiert zu werden.

Es wird nun vorzugsweise vorgeschlagen, dass vom Vorliegen einer niederfrequenten Schwingung ausgegangen wird, wenn in dem zeitabhängigen Frequenzbild zusätzlich zu einem Grundanteil wenigstens ein weiterer niederfrequenter Frequenzanteil vorhanden ist. Insoweit ist zu wiederholen, dass das zeitabhängige Frequenzbild zwar grafisch dargestellt werden kann, zur weiteren Auswertung aber nicht grafisch dargestellt werden muss. Mit zeitabhängigem Frequenzbild ist hier besonders gemeint, dass sich verschiedene Frequenzen verschiedener Intensität, also verschiedener Amplitude, auch zu unterschiedlichen Zeitpunkten ergeben können. Somit ergibt sich also keine einzelne Zahl und auch keine einzelne zeitabhängige skalare Funktion, sondern zeitabhängige Informationen, nämlich viele Frequenzinformationen zu jeder Zeit. Das wird hier als zeitabhängiges Frequenzbild bezeichnet.

Der Grundanteil ist hier üblicherweise die Netznennfrequenz, wobei aber die tatsächliche Netzfrequenz von der Netznennfrequenz abweichen kann, wobei wohl nur mit geringer Abweichung zu rechnen ist, was sich auch entsprechend in dem zeitabhängigen Frequenzbild wiederspiegeln kann, sofern die Genauigkeit für die Abweichung von der Netznennfrequenz ausreichend ist. Auf diesen Grundanteil kommt es aber nicht an, außer dass dieser leicht identifiziert werden kann und nicht als erkannte niederfrequente Schwingung interpretiert werden sollte. Dieser Grundanteil kann also ignoriert oder bei einer weiteren Auswertung herausgerechnet werden und nur das zusätzlich zu diesem Grundanteil Verbleibende wird untersucht, um die niederfrequenten Schwingungen zu erkennen.

Tritt also beispielsweise eine Frequenz im Bereich von 4 bis 6 Hz in diesem zeitabhängigen Frequenzbild häufig und mit ausreichender Intensität auf, so kann eine niederfrequente Schwingung im Bereich von 4 bis 6 Hz als erkannt gelten. Beispielsweise kann ein Schwellwert für die Intensität zugrunde gelegt werden. Außerdem oder alternativ kann ein über die Zeit verteilter zeitlicher Mindestanteil zugrunde gelegt werden, um von einer erkannten niederfrequenten Schwingung auszugehen. Wenn also beispielsweise in einem betrachteten Zeitraum nur in einem Bereich von 10% des gesamten Zeitraums eine niederfrequente Schwingung aufgetreten ist, so kann das beispielsweise als nicht ausreichend für das Erkennen einer niederfrequenten Schwingung angesehen werden. Tritt sie hingegen zu einem größeren Teil, beispielsweise zu mehr als 50% in dem Zeitbereich auf, so könnte dies als eine Erkennung einer niederfrequenten Schwingung angesehen werden, ggf. aber nur dann, wenn die Intensität ausreichend hoch ist. Dies soll nur zur Veranschaulichung gelten und es können grundsätzlich verschiedene Kriterien, wie beispielsweise verschiedene Schwellen, zugrunde gelegt werden.

Basierend auf einer so bestimmten Schwingungscharakteristik kann gezielt eine entsprechende Wirk- und/oder Blindleistung zur Bedämpfung vorgegeben werden. Besonders kann die Wirk- und/oder Blindleistungseinspeisung jeweils voneinander unabhängig für unterschiedliche Eigenschaften der Schwingungscharakteristik vorgegeben werden. Bspw. kann abhängig der Schwingungsform, ob also die Schwingung sinusförmig, dreiecksförmig, rechteckförmig oder anderweitig verzerrt ist, eine Wirkleistung moduliert werden. Gleichzeitig kann bspw. abhängig der Frequenz der Schwingung ein Arbeitspunkt des elektrischen Versorgungsnetzes identifiziert und durch eine stationäre Veränderung der Blindleistungseinspeisung verschoben werden. Die vorgeschlagene Wavelet-Analyse eignet sich besonders gut, diese beispielhaft genannten oder andere Eigenschaften der Schwingungscharakteristik zu identifizieren und dadurch gezielte Wirk- und/oder Blindleistungseinspeisungen zu ermöglichen.

Gemäß einer weiteren Ausgestaltung wird vorgeschlagen, dass ein zeitlicher Verlauf einer Amplitude des wenigstens einen weiteren Frequenzanteils erfasst wird. Auch diese Information lässt sich vorteilhafterweise dem zeitabhängigen Frequenzbild entnehmen. Durch die Erfassung dieses Verlaufs der Amplitude des weiteren Frequenzanteils kann besonders die Veränderung des Frequenzanteils erkannt werden. Insbesondere kann erkannt werden, ob die Amplitude zunimmt oder abnimmt. Besonders dann, wenn die Amplitude zunimmt, also mit der Zeit zunimmt, kann auf eine kritische Situation geschlossen werden, die ggf. ein Eingreifen auslösen sollte. Abhängig einer zeitlich zunehmenden Amplitude eines weiteren Frequenzanteils sollten dann bedämpfende Maßnahmen durchgeführt werden, insbesondere sollte ein bedämpfendes elektrisches Signal in das elektrische Versorgungsnetz eingespeist werden.

Es kommt aber auch in Betracht, dass sich die Amplitude verändert, ohne eine klare Tendenz zum Abnehmen oder Zunehmen zu zeigen. Aus der Art der Veränderung der Amplitude können ggf. Rückschlüsse auf die Situation im elektrischen Versorgungsnetz gezogen werden.

Durch die Aufnahme des zeitlichen Verlaufs kann besonders eine Grundlage für ein gezielt gegen einen solchen Frequenzanteil gegensteuerndes Einspeisesignal geschaffen werden.

Gemäß einer Ausführungsform wird vorgeschlagen, dass eine Wavelet-Mutterfunktion verwendet wird, die wenigstens eine Eigenschaft aufweist aus der folgenden Liste:

1. Die Wavelet-Mutterfunktion ist dazu vorbereitet, skalierbar zu sein.

Die Wavelet-Mutterfunktion ist besonders als Zeitsignal beschreibbar, also als eine über die Zeit veränderliche Funktion, wie beispielsweise:

$$f(t) = \cos(k \cdot t) \cdot \frac{1}{(k \cdot t)^2 + 1}$$

In dieser Formel soll die Funktion f(t) die Wavelet-Mutterfunktion bilden und diese Funktion wäre skalierbar, besonders auch nach der Zeit skalierbar. Das kann dadurch erreicht werden, dass in dieser beispielhaften Wavelet-Mutterfunktion der Faktor k entsprechend gewählt wird. Beispielsweise kann diese Wavelet-Mutterfunktion mit dem Faktor k=1 als Grundfunktion oder als unskalierte Funktion bezeichnet werden und durch Veränderung des Faktors k kann die Skalierung vorgenommen werden. Wird beispielsweise als Faktor k=2 gewählt, ergäbe sich eine Stauchung dieser Wavelet-Mutterfunktion.

Aber auch eine Betrachtung derselben Wavelet-Mutterfunktion im Frequenzbereich führt dazu, dass durch Veränderung des Faktors k die Funktion nach der Frequenz skaliert werden kann, also nach der Frequenz gestaucht oder gedehnt werden kann.

Die Wavelet-Mutterfunktion ist also dadurch dazu vorbereitet, skalierbar zu sein. Dafür ist der in dem Beispiel gezeigte Faktor k vorgesehen, über den die Skalierung erreicht wird.

Durch diese Skalierbarkeit nach der Zeit oder der Frequenz können unterschiedliche Frequenzen erfasst werden. Besonders kann hierüber, oder u.a. hierüber, die Wahl des Prüffrequenzbereichs umgesetzt werden.

2. Die Wavelet-Mutterfunktion ist dazu vorbereitet, zeitlich verschiebbar zu sein.

Das kann beispielsweise bedeuten, dass in der oben gezeigten veranschaulichenden Beispielwavelet-Mutterfunktion anstelle der Zeit t eine Zeit mit einem Offset verwendet wird. In der Formel kann also beispielsweise "t" durch "$t+t_0$" ersetzt werden. Das führt dann zu einer Verschiebung um die Zeit $t_0$, wobei diese Zeit $t_0$ auch negativ sein kann. Durch eine solche Verschiebung der Wavelet-Mutterfunktion kann ggf. besser eine Information erhalten werden, wann die jeweilige Frequenz, also die zu erkennende niederfrequente Schwingung, auftritt. Vorzugsweise wird eine Wavelet-Analyse mit derselben Wavelet-Mutterfunktion mehrfach durchgeführt, wobei als einziger Unterschied aber jeweils eine zeitlich verschobene Wavelet-Mutterfunktion verwendet wird. Dadurch können dann mehrere zeitabhängige Frequenzbilder erstellt werden und darin können dann ggf. dominante niederfrequente Schwingungen, also dominante niedrige Frequenzen an unterschiedlichen Stellen aber auch mit unterschiedlicher Ausprägung auftreten, je nachdem, wie die verwendete Wavelet-Mutterfunktion zeitlich in Bezug auf das analysierte Signal gelegen hat. Etwas anschaulich ausgesprochen kann diese niederfrequente Schwingung bzw. diese niedrige Frequenz in dem zeitabhängigen Frequenzbild unterschiedlich stark auftreten, abhängig davon, wie sehr sie im Zentrum der Wavelet-Mutterfunktion aufgetreten ist.

3. Die Wavelet-Funktion weist Lokalität sowohl im Frequenzbereich als auch im Zeitbereich auf. Unter Lokalität ist hier zu verstehen, dass die Wavelet-Mutterfunktion nicht gleich verteilt ist, also weder im Zeitbereich gleich verteilt ist, als auch im Frequenzbereich gleich verteilt ist. Beispielsweise ist eine Sinusfunktion im Zeitbereich gleich verteilt und weist somit keine Lokalität im Zeitbereich auf, denn sie oszilliert gleichmäßig mit gleicher Amplitude über den gesamten betrachteten Bereich. Ein Dirac-Impuls weist eine (starke) Lokalität im Zeitbereich auf, ist aber - zumindest theoretisch - im Frequenzbereich ohne Lokalität, denn er entspricht im Frequenzbereich einem weißen Rauschen.

Hier wird aber vorgeschlagen, dass sowohl im Frequenzbereich als auch im Zeitbereich Lokalität vorhanden ist. Diese Eigenschaft erfüllt beispielsweise die oben genannte Beispielfunktion. Sie weist nämlich für t=0 den größten Wert auf, der an keiner anderen Stelle erreicht wird. Somit weist sie im Bereich t=0 ihre Lokalität auf. Außerhalb von diesem Bereich existiert sie auch, klingt aber mit zunehmender Zeit ab bzw. auch in negative Richtung mit zunehmendem Zeitabstand.

Im Frequenzbereich weist diese beispielhafte Wavelet-Mutterfunktion auch Lokalität auf, weil sie nämlich ihre Hauptausprägung bei der Frequenz der dort verwendeten cos-Funktion aufweist. Vorsorglich wird darauf hingewiesen, dass die oben genannte veranschaulichende Beispielwavelet-Mutterfunktion natürlich nicht präzise angegeben ist, denn dort hängt die cos-Funktion von der Zeit ab, müsste also bei der tatsächlichen Umsetzung noch auf eine Zeit bzw. Grundfrequenz normiert werden. Würde sie beispielsweise auf 1 Hz als Grundfrequenz normiert bzw. bezogen werden, so wäre ihr größter Wert entsprechend bei 1 Hz im Frequenzbereich.

Mit dieser Lokalität wird besonders auch erreicht, dass bei der Wavelet-Analyse des erfassten elektrischen Signals dessen zeitliche Inhomogenität erfasst wird. Mit anderen Worten kann dadurch besonders gut erfasst werden, wann eine niederfrequente Schwingung bzw. die entsprechend niedrige Frequenz auftritt.

4. Vorzugsweise weist die Wavelet-Mutterfunktion ein Integral auf, das null ist. Wird also ein Integral über die gesamte verwendete Wavelet-Mutterfunktion gebildet, ist das Ergebnis null. Dadurch wird besonders trotz Lokalität der Wavelet-Mutterfunktion erreicht, dass diese im Zeitbereich ausgewogen im positiven und negativen Bereich, also anschaulich gesprochen über und unter der Zeitachse, ausgebildet ist. Das kann besonders auch bei der Verwendung im Frequenzbereich bzw. bei der Transformation von dem Zeitbereich in den Frequenzbereich vorteilhaft sein, weil quasi ein Gleichanteil vermieden wird.

5. Als Wavelet-Mutterfunktion wird ein Morlet-Wavelet, Daubechies D20-Wavelet oder ein mexikanischer Hut verwendet. Diese Wavelet-Funktionen sind dem Fachmann grundsätzlich bekannt, hier wurde aber erkannt, dass diese besonders gut für das Erkennen der niederfrequenten Schwingungen sinnvoll sind. Der mexikanische Hut kann im Übrigen durch die oben genannte veranschaulichende Beispielmutter-Wavelet-Funktion definiert werden.

Vorzugsweise wird vorgeschlagen, dass das Wirkleistungsdämpfungssignal ($\Delta P$) zum Bedämpfen von Interarea-Schwingungen oder Control-Mode-Schwingungen vorgegeben wird. Zusätzlich oder alternativ wird vorgeschlagen, dass das Blindleistungsdämpfungssignal ($\Delta Q$) zum Bedämpfen von Intraplant-Schwingungen, Localplant-Schwingungen, Interarea-Schwingungen oder Control-Mode-Schwingungen vorgegeben wird.

Es wurde erkannt, dass nur bestimmte Schwingungsarten der niederfrequenten Schwingungen mit der Wirkleistung beeinflusst werden können und somit eine Berücksichtigung der Schwingungsart notwendig ist, um die niederfrequenten Schwingungen gezielt dämpfen zu können. Die nachfolgende Tabelle 1 zeigt dabei, wie die entsprechenden Schwingungsarten mit einer Wirkleistung- (P) bzw. Blindleistungseinspeisung (Q) beeinflusst werden können.

**Tabelle 1**

| Schwingungsart | Wirkleistung P | Blindleistung Q |
|---|---|---|
| Intraplant-Schwingungen | nein | ja |
| Control-Mode-Schwingungen | ja | ja |
| Interarea-Schwingungen | ja | ja |
| Localplant-Schwingungen | nein | ja |
| Torsional-Moden zwischen rotierenden Anlagen | - | - |

Vorzugsweise wird vorgeschlagen, dass der Wirkleistungsanteil bzw. der Blindleistungsanteil entsprechend der Schwingungsart für eine vorgegebene Zeitdauer erhöht eingespeist wird, reduziert eingespeist wird, pulsweise erhöht oder reduziert eingespeist wird, in einer alternierenden Impulsfolge abwechselnd erhöht und reduziert eingespeist wird und zusätzlich oder alternativ rampenförmig ansteigend oder abfallend eingespeist wird.

Ein erhöhter bzw. reduzierter Wirkleistungsanteil/Blindleistungsanteil bezieht sich dabei auf einen Wirkleistungsanteil bzw. Blindleistungsanteil der zu dem Betriebspunkt vorliegt zu dem keine niederfrequente Schwingung im elektrischen Versorgungsnetz erfasst wurde. Wird z. B. eine Windenergieanlage zu einem Zeitpunkt $t_1$ mit einem Wirkleistungsanteil von 100% (Volllast) ohne einen Blindleistungsanteil betrieben, kann für eine vorgegebene Zeitdauer eine Steuerung des Windparks so erfolgen, dass die Windenergieanlagen auf 80% Wirkleistung gedrosselt werden und ein kapazitiver Blindleistungsanteil in das elektrische Versorgungsnetz eingespeist wird, wenn eine niederfrequente Schwingung erfasst wurde. Diese Variante entspricht der Reduktion des Wirkleistungsanteils und einer Erhöhung des Blindleistungsanteils.

Es wurde erkannt, dass mittels der geänderten Einspeisung, das elektrische Versorgungsnetz in einen anderen Arbeitspunkt mit geänderten Lastflüssen verschoben werden kann bzw. dass der Arbeitspunkt des elektrischen Versorgungsnetzes verschoben werden kann. Ein anderer Arbeitspunkt beschreibt hier einen geänderten Lastflusszustand im elektrischen Netz, der dazu führt, dass die niederfrequente Schwingung bedämpft wird. Zudem wurde erkannt, dass der Windpark nicht dauerhaft eine geänderte Leistung (P oder Q) einspeisen muss, sondern das Versorgungsnetz durch eine kurzzeitig geänderte Leistungseinspeisung dauerhaft in einen anderen Systemzustand verschoben werden kann. Besonders wird dabei vorgeschlagen, dass die vorbestimmte Zeitdauer mit der eine geänderte Leistungseinspeisung erfolgt, länger auszulegen ist als eine Halbwelle der niederfrequenten Schwingung. Die vorgegebene Zeitdauer liegt somit in einem Bereich von wenigen Millisekunden bis einigen Sekunden, beispielsweise von 0,3 bis 30 Sekunden.

Besonders bevorzugt ist dabei die Variante, dass für eine vorgegebene Zeitdauer der Wirkleistungsanteil reduziert eingespeist wird. Hier liegt die Erkenntnis zu Grunde, dass durch die Reduktion der Wirkleistung, der Leistungsfluss in das elektrische Versorgungsnetz reduziert wird, nämlich wenigstens um den Anteil den der Windpark nicht mehr einspeist, und somit die ungewünschten niederfrequenten Schwingungen weniger stark energetisch angeregt werden.

Vorzugsweise wird vorgeschlagen, dass die Schwingungscharakteristik wenigstens eine zusätzliche Eigenschaft der Liste umfasst, nämlich eine Phasenlage ($\varphi_{Grid}$) des Schwingungssignals, eine Schwingungsamplitude des Schwingungssignals oder ein charakteristisches Frequenzspektrum des Schwingungssignals.

Die Phasenlage des Schwingungssignals beschreibt insbesondere, wie das Schwingungssignal bzw. die niederfrequente Schwingung in ihrem Phasenwinkel zu einem Referenzsignal liegt. Das kann bspw. die Phasenlage der Schwingung zu einem vorgegebenen Referenzsignal sein, das auch ein willkürliches Signal sein kann. Somit ist besonders die absolute Phasenlage relevant, die ggf. beim Einspeisen eines entsprechend modulierten Dämpfungssignals zu berücksichtigen ist.

Die Schwingungsamplitude des Schwingungssignals beschreibt die maximale Auslenkung zur der Lage des arithmetischen Mittelwerts des Schwingungssignals. Das Frequenzspektrum bezieht sich besonders auf ein Spektrum, das durch Anwendung einer Fouriertransformation bestimmt wurde. Dem Grunde nach sind die genannten Eigenschaften einer Schwingung aber bekannt und insoweit wird auf entsprechende Fachliteratur bzw. das Fachwissen des Fachmanns verwiesen. Hier wird besonders vorgeschlagen, diese Eigenschaften zur Charakterisierung der Schwingung zu verwenden, um darauf aufbauend die Bedämpfung zu steuern.

Der Ort an dem das Schwingungssignal detektiert wurde kann beispielsweise in Form von GPS Koordinaten vorliegen. So kann eine räumliche Bewegung einer niederfrequenten Schwingung im elektrischen Versorgungsnetz oder einem Teilnetzabschnitt ausgewertet werden.

Vorzugsweise wird vorgeschlagen, dass die Netzcharakteristik des elektrischen Versorgungsnetzes wenigstens eine Netzsensitivität ist oder umfasst, die eine Änderung der Spannung am Netzanschlusspunkt bezogen auf eine Änderung der eingespeisten Leistung am Netzanschlusspunkt beschreibt. Eine wichtige Information für die vorgesehene Steuerung des Windparks zum Einspeisen elektrischer Energie in das Netz ist die Netzsensitivität. Diese Netzsensitivität ist eine Eigenschaft, die insbesondere auf den Netzanschlusspunkt bezogen ist. Sie hängt von Netzeigenschaften wie der Netztopologie aber auch von aktuellen Netzzuständen ab. Sie gibt im Grunde an, wie empfindlich die Spannung am Netzanschlusspunkt auf Einflüsse reagiert, und damit gibt sie an, wie empfindlich das elektrische Versorgungsnetz dort ist. Wenn der Erzeuger eine Windenergieanlage oder ein Windpark mit mehreren Windenergieanlagen ist, ist die schwankende Windgeschwindigkeit eine äußere Größe, die über die Windenergieanlage auf das Netz und damit auf die Spannung am Anschlusspunkt Einfluss haben kann. Auch Schwankungen der Windgeschwindigkeit können dadurch einen starken oder schwachen Einfluss auf die Spannung am Anschlusspunkt haben und entsprechend kann dadurch auch eine hohe oder schwache Netzsensitivität hinsichtlich Schwankungen der Windgeschwindigkeit vorliegen.

Zusätzlich oder alternativ wird vorgeschlagen, dass die Netzcharakteristik des elektrischen Versorgungsnetzes eine Netztopologie ist oder umfasst, die den konstruktiven Aufbau des Netzes beschreibt und/oder eine Art, eine Anzahl und einen Anschlussort von angeschlossenen Verbraucher und Erzeuger im Netz beschreibt. Die Netztopologie kann somit auch die Größe und Entfernung vorhandener Synchronmaschinen, von denen besonders auch deren Schwungmassen relevant sein können, oder ein Umrichteranteil im elektrischen Versorgungsnetz beschreiben oder beinhalten. Ebenfalls kann ein konstruktiver Aufbau und eine räumliche Ausdehnung des elektrischen Versorgungsnetzes berücksichtigt werden. Eine Art von Erzeugern kann dabei eine Unterscheidung zwischen Kleinerzeuger oder Gro-βerzeugern sein. Zudem kann auch eine Entfernung zu einem Netzschwerpunkt wie einer Großstadt der Netztopologie zugeordnet werden.

Zusätzlich oder alternativ wird vorgeschlagen, dass die Netzcharakteristik des elektrischen Versorgungsnetzes wenigstens eine Netzimpedanz, insbesondere am Netzanschlusspunkt, ist oder umfasst. Weitere Impedanzen, die in einer besonderen Ausführungsform der Netzcharakteristik berücksichtigt werden, sind eine Impedanz zwischen direkt gekoppelten Synchrongeneratoren, die besonders durch ihre Schwungmassen einen starken Einfluss haben können, im Versorgungsnetz sowie eine Impedanz zwischen den Windenergieanlagen und einem Netzschwerpunkt, wie einem Stadtgebiet.

Zusätzlich oder alternativ wird vorgeschlagen, dass die Netzcharakteristik des elektrischen Versorgungsnetzes eine Netzfrequenz ($f_{Grid}$) einer Netzspannung ist oder umfasst. Diese beträgt üblicherweise 50Hz oder 60Hz.

Zusätzlich oder alternativ wird vorgeschlagen, dass die Netzcharakteristik des elektrischen Versorgungsnetzes wenigstens ein Kurzschlussstromverhältnis, insbesondere am Netzanschlusspunkt, ist oder umfasst. Das Kurzschlussstromverhältnis betrifft dabei das Verhältnis der Kurzschlussleistung des Versorgungsnetzes des Anschlusspunktes bezogen auf die Anschlussleistung des Wind parks, insbesondere die Summe der Nennleistungen aller Windenergieanlagen des betrachteten Windparks. In einer besonderen Ausführungsform stellt ein Netzbetreiber Informationen zu den zuvor beschriebenen Eigenschaften des elektrischen Versorgungsnetzes bereit.

Vorzugsweise wird vorgeschlagen, dass wenigstens eine Netzcharakteristik mittels eines Analyseverfahrens bestimmt wird aus der Liste aufweisend eine Netzsensitivitätsanalyse zur Bestimmung der Netzsensitivität, eine Netztopologieanalyse zur Bestimmung der Netztopologie, und eine Netzfrequenzanalyse zur Bestimmung der charakteristischen Frequenz und des charakteristischen Frequenzspektrums. Die aufgeführten Analyseverfahren werden dabei zur Bestimmung der Netzcharakteristik bzw. zur Bestimmung der Netzeigenschaften durchgeführt und können dabei im Vorfeld einer Inbetriebnahme des Windparks oder im laufenden Betrieb des Windparks bestimmt werden. Diese werden insbesondere dann ausgeführt, wenn die Eigenschaften des elektrischen Versorgungsnetzes unbekannt sind.

Vorzugsweise wird vorgeschlagen, dass die Netzsensitivitätsanalyse die Schritte umfasst:

- Ändern der eingespeisten Wirkleistung und zusätzlich oder alternativ der eingespeisten Blindleistung, und
- Bestimmen einer Frequenzreaktion oder Amplitudenreaktion der Spannung am Netzanschlusspunkt auf die Änderung der eingespeisten Wirkleistung und zusätzlich oder alternativ Blindleistung.

In einer besonderen Ausführungsform wird vorgeschlagen, dass die Frequenzreaktion oder Amplitudenreaktion durch Berechnung einer partiellen Ableitung der Netzspannung nach der Wirkleistung und/oder einer partiellen Ableitung der Spannung nach der Blindleistung bestimmt wird. Es wird also die Änderungsrate der Frequenz und der Amplitude der Netzspannung bestimmt, jeweils für die Wirkleistung oder die Blindleistungsänderung. Dabei wird insbesondere die Frequenzänderung der Netzspannung auf eine geänderte Wirkleistungseinspeisung sowie die Amplitudenänderung der Netzspannung auf eine geänderte Blindleistung bestimmt.

Vorzugsweise wird vorgeschlagen, dass eine bzw. die Netztopologieanalyse wenigstens den Schritt umfasst einen Aufbau und eine Ausdehnung des elektrischen Netzes anhand von Netzplänen oder Entfernungsmessungen zu ermitteln. Ein Netzplan kann dabei von einem Netzbetreiber bezogen werden.

Zusätzlich oder alternativ kann eine bzw. die Netztopologieanalyse den Schritt umfassen, eine Netzimpedanz zwischen zwei Punkten im elektrischen Versorgungsnetz zu erfassen. In einer besonderen Ausführungsform wird vorgeschlagen, die Netzimpedanz zwischen einer Windenergieanlage und einem Netzschwerpunkt zu erfassen, wobei der Netzschwerpunkt vorzugsweise einen Netzanschlusspunkt oder Netzbereich beschreibt, an dem wenigstens ein Kraftwerk mit wenigstens einem direkt mit dem elektrischen Versorgungsnetz gekoppelten Synchrongenerator angeschlossen ist.

Zusätzlich oder alternativ kann eine bzw. die Netztopologieanalyse den Schritt umfassen, ein Kurzschlussstromverhältnis anhand von Vorgaben eines Netzbetreibers oder durch Berechnung zu ermitteln.

Ferner wird erfindungsgemäßen ein Windpark oder Windenergieanlage vorgeschlagen. Ein solcher Windpark bzw. eine solche Windenergieanlage umfasst wenigstens eine Messeinrichtung zum Erfassen wenigstens einer niederfrequenten elektrischen Schwingung im elektrischen Versorgungsnetzes, eine Erkennungseinrichtung zum Bestimmen jeweils einer Schwingungscharakteristik der wenigstens einen erfassten Schwingung, eine Steuereinrichtung zum Vorgeben eines Wirkleistungsdämpfungssignals ($\Delta P$) und/oder eines Blindleistungsdämpfungssignals ($\Delta Q$) und eine Einspeiseeinrichtung zum Einspeisen eines Wirkleistungsanteils entsprechend des Wirkleistungsdämpfungssignals bzw. eines Blindleistungsanteils entsprechend des Blindleistungsdämpfungssignals.

Demnach ist der Windpark bzw. die Windenergieanlage dazu eingerichtet, Wirk- und Blindleistung mittels der Einspeiseeinrichtung in ein elektrisches Versorgungsnetz mit einer Netzspannung einzuspeisen, wobei die Netzspannung eine Netznennfrequenz aufweist. Die Netznennfrequenz beträgt dabei üblicherweise 50Hz oder 60Hz. Die niederfrequente elektrische Schwingung, die mittels der Messeinheit erfasst wird, weist dabei eine Frequenz auf, wobei die Frequenz bspw. unterhalb der halben Netznennfrequenz liegen kann. Somit wird gemäß diesem Beispiel vorgeschlagen, dass eine niederfrequente Schwingung in einem Frequenzbereich unterhalb von 25 Hz oder 30Hz erfasst wird, vorzugsweise in einem Frequenzbereich von 5-15Hz, insbesondere in einem Frequenzbereich von 0,2-3Hz. Dazu kann die Messeinrichtung als Spannungsmessgerät ausgebildet sein und wenigstens eine Netzspannung des elektrischen Versorgungsnetzes messen.

Neben der Messeinrichtung umfasst der Windpark bzw. die Windenergieanlage eine Erkennungseinrichtung zum Bestimmen jeweils einer Schwingungscharakteristik derwenigstens einen erfassten Schwingung, wobei die Schwingungscharakteristik wenigstens eine Eigenschaft der erfassten Schwingung beschreibt. Die Erkennungseinrichtung kann dabei als Prozessrechner vorgesehen sein oder auf einem solchen Prozessrechner implementiert sein. Demnach wird vorgeschlagen, die Erkennungseinrichtung als Hardware oder als Teil eines Computerprogramms zu realisieren. Besonders ist die Erkennungseinrichtung dazu vorbereitet, Messdaten der Messeinrichtung bzw. die Informationen über die von der Messeinrichtung erfassten Schwingung zu empfangen und zu verarbeiten. Demnach kann die Erkennungseinrichtung die Messung der Messeinrichtung bzw. die erfasste Netzspannung auswerten, und die niederfrequente Schwingung über Eigenschaften charakterisieren, wie eine Phasenlage des Schwingungssignals, eine Schwingungsamplitude des Schwingungssignals, ein charakteristisches Frequenzspektrum der niederfrequenten Schwingungen, oder ein Ort an dem das Schwingungssignals detektiert wurde.

Als weitere Komponente des Windparks bzw. der Windenergieanlage wird eine Steuereinrichtung zum Vorgeben eines Wirkleistungsdämpfungssignals $\Delta P$ und zusätzlich oder alternativ eines Blindleistungsdämpfungssignals $\Delta Q$ vorgeschlagen. Die Steuereinrichtung kann dabei auch ein Teil der Erkennungseinrichtung sein. Die Steuereinrichtung ist besonders dazu vorbereitet, in Abhängigkeit der bestimmten Schwingungscharakteristik Wirkleistungsdämpfungssignals $\Delta P$ und das Blindleistungsdämpfungssignals $\Delta Q$ zu erzeugen und der Einspeiseeinheit vorzugeben. Die Steuereinrichtung kann dabei ebenfalls auf einem Prozessrechner vorgesehen oder als Teil eines Computerprogramms implementiert sein.

Zusätzlich umfasst der Windpark oder die Windenergieanlage auch eine Einspeiseeinrichtung zum Einspeisen eines Wirkleistungsanteils entsprechend des Wirkleistungsdämpfungssignals bzw. eines Blindleistungsanteils entsprechend des Blindleistungsdämpfungssignals, wobei das Vorgeben des Wirkleistungsdämpfungssignals ($\Delta P$) bzw. des Blindleistungsdämpfungssignals ($\Delta Q$) in Abhängigkeit der bestimmten Schwingungscharakteristik erfolgt. Die Einspeiseeinheit ist dabei vorzugsweise ein steuerbarer Umrichter bzw. Wechselrichter.

Gemäß einer Ausführungsform wird vorgeschlagen, dass der Windpark oder der Windenergieanlage, insbesondere mittels der Messeinrichtung, der Erkennungseinrichtung, der Steuereinrichtung sowie der Einspeiseeinrichtung, dazu eingerichtet ist, ein Verfahren gemäß einer der vorstehend beschriebenen Ausführungsformen auszuführen.

Zusammengefasst wird somit ausgenutzt, dass sowohl die Wirk- als auch die Blindleistung einer modernen Windenergieanlage sehr schnell moduliert werden kann. Die Idee ist es dabei mittels Windenergieanlagen bzw. des Windparks eine Einspeisung in das Netz vorzunehmen, um niederfrequente Schwingungen zu dämpfen. Insbesondere ist es von Vorteil, eine Blindleistungseinspeisung vorzunehmen, da diese nur einen sehr kleinen Einfluss auf den Ertrag einer Windenergieanlage haben. Es lassen sich aber nicht alle Arten der niederfrequenten Schwingungen bzw. Schwingungssignale durch Blindleistungssignale dämpfen, wie die obige Tabelle 1 zeigt. Daher wird insbesondere vorgeschlagen eine geeignete Aufteilung von Wirk- und Blindleistung zu verwenden, um einerseits mögliche Ertragsverluste zu minimieren und andererseits ein optimales Dämpfungsergebnis zu erhalten. Dabei wird in einem ersten Schritt die niederfrequente Schwingung identifiziert, um dann die Einspeisung daran angepasst vorzunehmen.

Nachfolgend wird die Erfindung anhand von Ausführungsformen unter Bezugnahme auf die begleitenden Figuren beispielhaft erläutert.

Figur 1    zeigt schematisch eine Windenergieanlage.

Figur 2    zeigt schematisch einen Windpark.

Figur 3    zeigt schematisch eine Reglerstruktur zur Steuerung des Windparks.

Figur 4    zeigt schematisch zwei Spannungsverläufe einer Netzspannung.

Figur 5    zeigt schematisch ein Ablaufdiagramm zum Steuern eines Windparks.

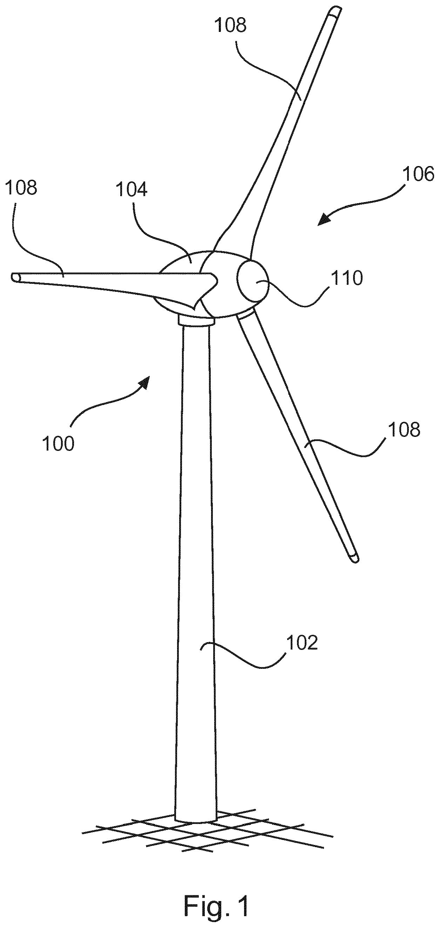

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

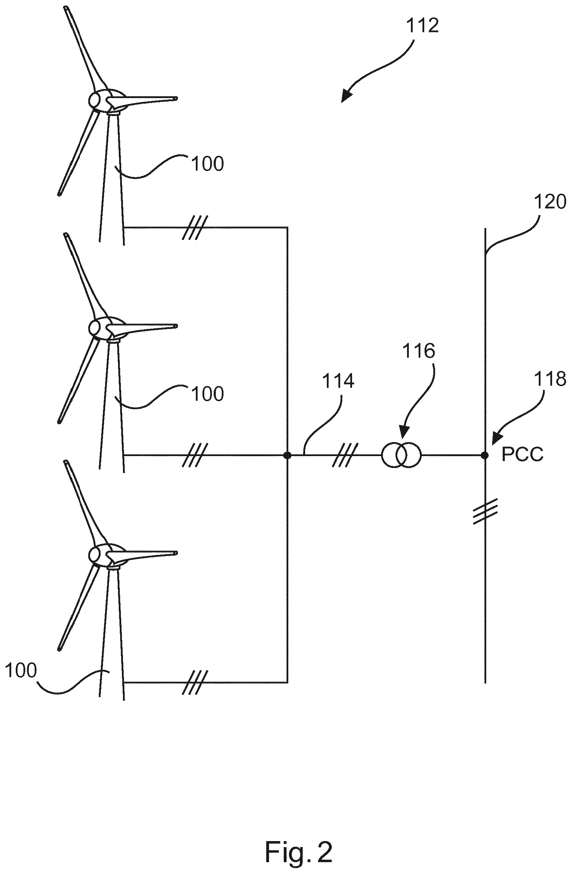

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

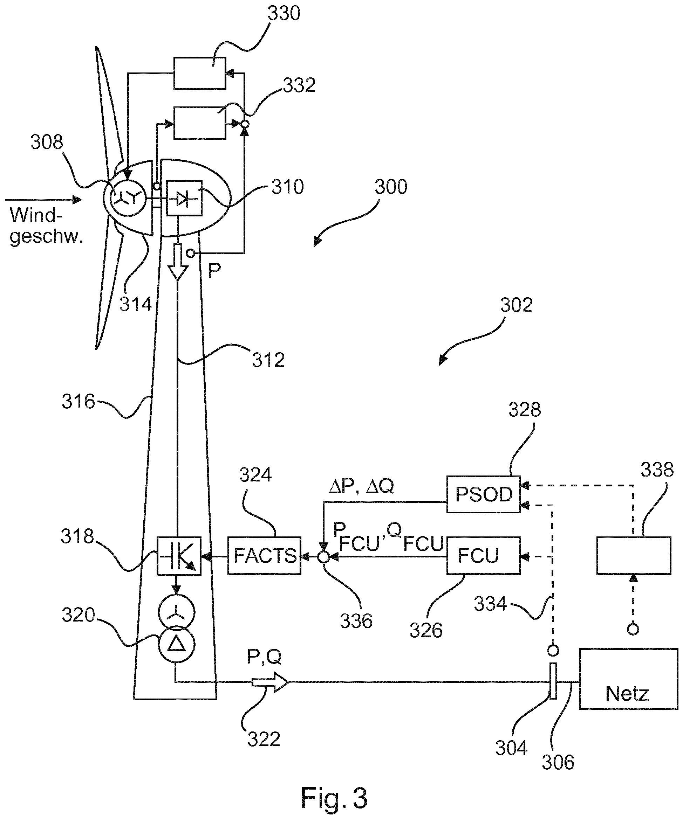

Figur 3 zeigt eine Reglerstruktur 302 zur Steuerung des Windparks zum Bedämpfen der niederfrequenten Schwingungen. Zur Veranschaulichung ist in der Figur 3 nur eine Windenergieanlage 300 gezeigt, die eine von mehreren Windenergieanlagen eines Windparks sein kann, wie er bspw. in der Figur 2 gezeigt ist. Die Windenergieanlage 300 ist über einen Netzanschlusspunkt 304 an ein elektrisches Versorgungsnetz 306 angeschlossen. Das elektrische Versorgungsnetz 306 wird nachfolgend vereinfachend auch als Netz oder Netzwerk bezeichnet, wobei diese Begriffe als Synonyme anzusehen sind.

Die Windenergieanlage 300 weist einen Generator 308 auf, der durch den Wind betrieben wird und dadurch elektrische Energie erzeugt. Der Generator 308 ist in einer Ausführungsform als elektrisch erregter Mehrphasen-Synchrongenerator mit zwei jeweils sternförmig verschalteten 3-Phasensystemen ausgebildet, was durch die beiden Sternsymbole in dem Generator 308 der Fig. 3 veranschaulicht wird. Der so erzeugte Wechselstrom, nämlich in dem genannten Beispiel 6-phasige Wechselstrom, wird mit einem Gleichrichter 310 gleichgerichtet und als Gleichstrom über eine entsprechende Gleichstromleitung 312, die mehrere Einzelleitungen umfassen kann, von der Gondel 314 den Turm 316 herunter zu einem Wechselrichter 318 übertragen.

Der Wechselrichter 318 erzeugt aus dem Gleichstrom einen Wechselstrom, nämlich in dem gezeigten Beispiel einen 3-phasigen Wechselstrom zum Einspeisen in das Netz 306. Hierzu wird die vom Wechselrichter 318 erzeugte Wechselspannung noch mittels eines Transformators 320 hochtransformiert, um dann am Netzanschlusspunkt 304 in das Netz 306 eingespeist zu werden. Der gezeigte Transformator 320 verwendet eine Stern-Dreiecksschaltung, nämlich primärseitig eine Sternschaltung und sekundärseitig eine Dreiecksschaltung, was hier nur als ein Beispiel einer Ausführungsform dargestellt ist.

Die Einspeisung in das Netz 306 kann neben der Einspeisung von Wirkleistung P auch die Einspeisung von Blindleistung Q beinhalten, was durch den Wirkpfeil 322 veranschaulicht wird. Für die konkrete Einspeisung wird der Wechselrichter 318 durch eine entsprechende Steuereinheit 324 angesteuert, wobei die Steuereinheit 324 auch baulich mit dem Wechselrichter 318 vereint sein kann. Diese Steuerung 324 ist als FACTS-Steuerung vorgesehen. Die Abkürzung FACTS steht dabei für den Begriff "Flexible AC Transmission System", der auch in den deutschsprachigen Fachkreisen verwendet wird. Insbesondere ist eine solche FACTS-Steuerung dazu vorbereitet, Strom mit vorgebbarer Frequenz und Phase in das elektrische Versorgungsnetz 306 einzuspeisen oder daraus zu entnehmen. Besonders ist damit ein 4-Quadranten-Betrieb möglich, der Wirk- und Blindleistung einspeisen und/oder entnehmen kann.

Besonders soll die Fig. 3 den grundsätzlichen Wirkaufbau veranschaulichen und die konkrete Anordnung einzelner Elemente kann auch anders als dargestellt gewählt werden. Bspw. kann der Transformator 320 außerhalb des Turms 316 vorgesehen sein.

Die Steuereinheit 324 steuert den Wechselrichter 318 insbesondere so an, dass die Art und Weise der Einspeisung in das Netz 306 gesteuert wird. Dabei werden Aufgaben wahrgenommen wie den einzuspeisenden Strom an die Situation im Netz 306, insbesondere Frequenz, Phase und Amplitude der Spannung im Netz 306 anzupassen. Außerdem ist die Steuereinheit 324 dazu vorgesehen, den Anteil von Wirkleistung P und Blindleistung Q der aktuell in das Netz 306 eingespeisten Leistung zu steuern.

Hier werden Messungen im Netz 304, insbesondere am Netzanschlusspunkt 304 vorgenommen und entsprechend ausgewertet. Alternativ kann auch eine Messung an den Ausgangsklemmen des Wechselrichters 318 vorgenommen werden, was in der Figur 3 nicht dargestellt ist.

Im Gegensatz zu bereits bekannten Spannungssteuersystem wird die Spannung im Netz bzw. am Netzanschlusspunkt 304 oder an den Anschlussklemmen der Windenergieanlage gemessen und anschließend einem Windparkregler 326 und eine Erfassungseinheit 328 bereitgestellt, was mit dem gestrichelten Pfeil 334 angedeutet ist. Die Abkürzung FCU im Block 326 steht dabei für den Begriff "Farm Control Unit", und beschreibt somit, auch im Sprachgebrauch deutscher Fachleute, einen Windparkregler. Die Abkürzung PSOD im Block 328 steht für den Begriff "Power System Oscillation Damping", zu Deutsch: Dämpfung von Oszillationen in einem Energiesystem und beschreibt somit, auch im Sprachgebrauch deutscher Fachleute, eine Bedämpfung niederfrequenter Schwingungen.

Die Erfassungseinheit 328 ist dabei, im Vergleich zu dem Windparkregler 326, zum Erfassen wenigstens einer niederfrequenten elektrischen Schwingung des elektrischen Versorgungsnetzes vorgesehen und eingerichtet, insbesondere indem diese die erfasste Netzspannung auswertet. Dazu kann die Erfassungseinheit 328 einen Tiefpassfilter und eine Auswertungseinheit aufweisen, um den charakteristischen Frequenzbereich niederfrequenter Schwingungen zu filtern und eine Analyse der Netzspannung auszuführen. Dabei kann die Erfassungseinheit beispielsweise Analysemethoden wie eine FFT-Analyse, eine Wavelet-Analyse oder eine Gradienten-Analyse ausführen.

Das Ergebnis der Analyse bzw. der Auswertung ist die Schwingungscharakteristik, die wenigstens eine Eigenschaft einer erfassten Schwingung beschreibt. Die Erfassungseinheit bestimmt somit jeweils zu einer niederfrequenten Schwingung eine Schwingungscharakteristik. In einem konkreten Beispiel erstellt die Erfassungseinheit eine Schwingungscharakteristik in Form eines Parametervektors oder Parametersatz, in dem die Eigenschaften der erfassten niederfrequenten Schwingung als Einträge gespeichert sind, wie zum Beispiel die Schwingungsart und die Frequenz der erfassten niederfrequenten Schwingung. Wenn mehrere niederfrequente Schwingungen auftreten, können mehrere Schwingungscharakteristika bestimmt werden, also zum Beispiel, zwei Parametersätze jeweils zu einer Schwingung erstellt werden.

Die Erfassungseinheit 328 erfasst somit eine oder mehrere niederfrequente elektrische Schwingungen im elektrischen Versorgungsnetz und bestimmt jeweils eine Schwingungscharakteristik der wenigstens einen erfassten Schwingung, wobei die Schwingungscharakteristik wenigstens eine Eigenschaft der erfassten Schwingung beschreibt.

Nachdem die Erfassungseinheit 328 somit eine oder mehrere niederfrequente elektrische Schwingungen im elektrischen Versorgungsnetz erfasst und über die Schwingungscharakteristik charakterisiert hat, erfolgt ein Vorgeben eines Wirkleistungsdämpfungssignals $\Delta P$ und eines Blindleistungsdämpfungssignals $\Delta Q$, basierend auf dem Ergebnis der Auswertung bzw. Charakterisierung der niederfrequenten Schwingung. Es wird somit vorgeschlagen, nicht nur einen einfachen Grenzwert zu berücksichtigen, sondern die niederfrequente Schwingung zunächst durch eine Analyse zu charakterisieren. Die niederfrequente Schwingung zu charakterisieren erfolgt besonderes aus dem Grund, eine einzelne Information über die Schwingung, wie einen Frequenzwert, zu verbessern, um auch Ursachen für die Schwingung mit berücksichtigen zu können.

Das Vorgeben der beiden Dämpfungssignale $\Delta P$ und $\Delta Q$ erfolgt dabei gemäß der gezeigten Ausführungsform parallel und somit unabhängig einer Vorgabe der Leistungssollwerte $P_{FCU}$ und $Q_{FCU}$, die vom Windparkregler 326 erzeugt werden. Anschließend werden die parallel erzeugten Dämpfungssignale $\Delta P$ und $\Delta Q$ sowie die Leistungssollwerte $P_{FCU}$ und $Q_{FCU}$ des Windparkreglers der Steuerung 324 vorgegeben. Dazu werden die Signale $\Delta P$, $\Delta Q$, $P_{FCU}$ und $Q_{FCU}$ an einem Knotenpunkt 336 zu zwei Gesamtsollwertsignalen addiert, jeweils eines für Wirkleistung und eines für Blindleistung. Die Steuerung 324 steuert den Wechselrichter 318 daraufhin in Abhängigkeit der beiden Gesamtsollwertsignale und schließt somit den Regelkreis zur Leistungssteuerung.

Figur 3 zeigt auch eine Elemente zum Vorgeben des Wirkleistungsdämpfungssignals ($\Delta P$) bzw. des Blindleistungsdämpfungssignals ($\Delta Q$) zusätzlich in Abhängigkeit einer bestimmten Netzcharakteristik. Dazu werden der Aufbau bzw. die Eigenschaft des elektrischen Versorgungsnetzes 306, wie die Netzsensitivität, das Kurzschlussstromverhältnis oder die Netztopologie von einer Netzmesseinheit 338 erfasst oder diese Eigenschaften in der Netzmesseinheit 338 hinterlegt, wenn diese bekannt sind. Die Netzcharakteristik wird dann, zusätzlich zur Schwingungscharakteristik bei der Vorgabe des Wirkleistungsdämpfungssignals $\Delta P$ bzw. des Blindleistungsdämpfungssignals $\Delta Q$ durch die Erfassungseinheit 328 berücksichtigt. Die Netzmesseinheit 338 kann dabei auch ein Teil der Erfassungseinheit 328 sein. Die Netzmesseinheit kann bspw. dazu eingerichtet sein, eine Leistung in das elektrische Versorgungsnetz einzuspeisen und die Reaktion des Netzes, besonders der Netzspannung, zu erfassen und daraus eine Eigenschaft des Netzes ableiten, wie beispielsweise die Netzsensitivität.

Abschließend veranschaulicht die Figur 3 zudem die Steuerung des Generators der Windenergieanlage. Die Steuerung des Generators ist im Bereich der Gondel ein Leistungssteuerblock 330 und ein Leistungsauswerteblock 332 vorgesehen. Der Leistungssteuerblock 330 steuert insbesondere die Erregung, nämlich den Erregerstrom, des fremderregten Synchrongenerators im Beispiel der gezeigten Ausführung. Der Leistungsauswerteblock 332 wertet die dem Gleichrichter 310 zugeführte Leistung aus und vergleicht sie mit der vom Gleichrichter 310 über die Gleichstromleitungen 312 zum Wechselrichter 318 abgegebene Leistung. Das Ergebnis dieser Auswertung wird weiter an den Leistungssteuerblock 330 gegeben.

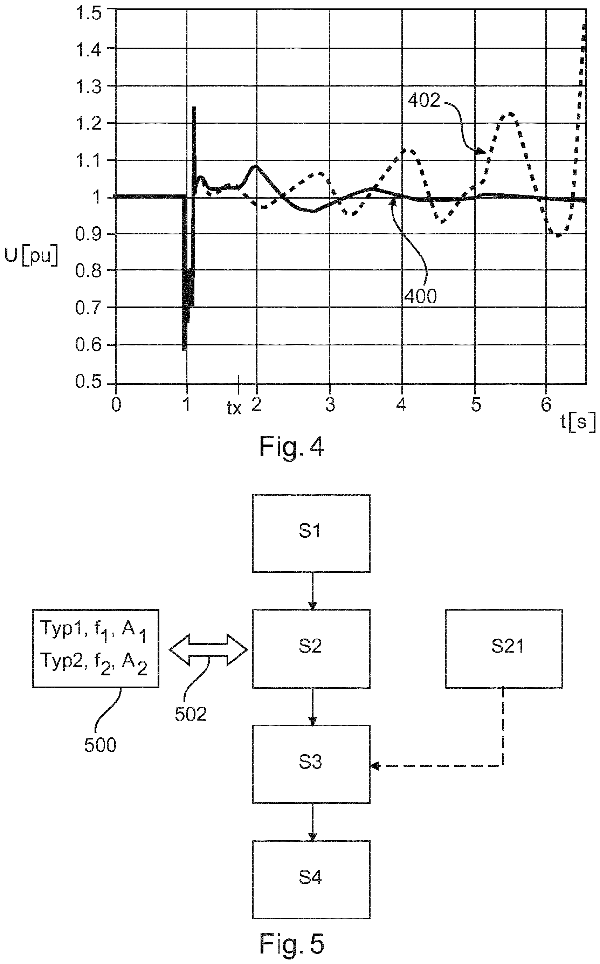

Figur 4 zeigt schematisch zwei Spannungsverläufe einer Netzspannung. Dazu ist in dem gezeigten Diagramm die Netzspannung an den Anschlussklemmen einer Windenergieanlage in per-unit über der Zeit in Sekunden aufgetragen. Zum Zeitpunkt t = 1s ereignet sich dem Spannungsverlauf nach ein Netzfehler, der zu einem starken Spannungsabfall der Netzspannung bis auf 0,6pu der Netzspannung führt. Anschließend steigt die Netzspannung etwa zum Zeitpunkt t=1.1 wieder stark an. Diese impulsförmige Anregung kann dazu führen, dass das elektrische Versorgungsnetz, das ein schwingungsfähiges Energiesystem ist, zu einer niederfrequenten Schwingung angeregt werden kann.

Zum Zeitpunkt tx wird von der Erfassungseinheit 328 eine niederfrequente Schwingung erfasst und z. B. als Control-Mode Schwingung charakterisiert, die von dem impulsförmigen dem Spannungssprung angeregt wurde. Ab diesem Zeitpunkt wird nun ein Wirk- und Blindleistungsdämpfungssignal von der Erfassungseinheit vorgeben, sodass die niederfrequente Schwingung durch die geänderte Einspeisung des Windparks bedämpft wird. Es stellt sich der stabile Verlauf der Netzspannung 400 ein.

Der Verlauf der Netzspannung 402 zeigt im Vergleich dazu den Fall, in dem keine Erfassungseinheit 328 verwendet wird und kein Dämpfungssignal vorgegeben. Die niederfrequente Schwingung gerät durch eine fehlende dämpfend wirkende Wirk- oder Blindleistungseinspeisung in Resonanz und schwingt sich auf.

Figur 5 zeigt ein Ablaufdiagramm gemäß dem erfindungsgemäßen Verfahren. Dabei erfolgt in einem ersten Schritt S1 ein Erfassen wenigstens einer niederfrequenten elektrischen Schwingung des elektrischen Versorgungsnetzes. Der Schritt S1 kann somit auch als ein Messschritt verstanden werden. Anschließend wird im Schritt S2 ein Bestimmen jeweils einer Schwingungscharakteristik der wenigstens einen erfassten Schwingung durchgeführt, wobei die Schwingungscharakteristik wenigstens eine Eigenschaft der erfassten Schwingung beschreibt. Der Schritt S2 kann demnach als ein Charakterisierungsschritt aufgefasst werden, bei dem zum Beispiel eine erste niederfrequente Schwingung über eine Schwingungsart Typ1, eine Frequenz $f_1$ und eine Schwingungsamplitude $A_1$ und eine zweite niederfrequente Schwingung über Typ2, $f_2$, $A_2$ charakterisiert wird. Es ist dabei durch den Doppelpfeil 502 angedeutet, dass ein Abgleich 502 mit einer Umsetzungstabelle 500 erfolgen kann, um Ergebnisse einer Auswertung, die im Schritt S2 ausgeführt wird, einer Schwingungsart zu zuordnen. Zudem können in der Umsetzungstabelle auch Sollwerte für das Wirkleistungs- $\Delta P$ bzw. für das Blindleistungsdämpfungssignal $\Delta Q$ hinterlegt sein, die entsprechend der charakterisierten niederfrequenten Schwingung ausgelesen werden.

In einem weiteren Schritt S3 erfolgt ein Vorgeben eines Wirkleistungsdämpfungssignals und zusätzlich oder alternativ ein Vorgeben eines Blindleistungsdämpfungssignals jeweils zum Bedämpfen der wenigstens einen durch die Schwingungscharakteristik charakterisierten niederfrequenten Schwingung. Dabei erfolgt das Vorgeben des Wirkleistungsdämpfungssignals $\Delta P$ bzw. des Blindleistungsdämpfungssignals $\Delta Q$ in Abhängigkeit der bestimmten Schwingungscharakteristik. In einem letzten Schritt S4 erfolgt anschließend ein Einspeisen eines Wirkleistungsanteils entsprechend des Wirkleistungsdämpfungssignals bzw. eines Blindleistungsanteils entsprechend des Blindleistungsdämpfungssignals.

Dabei ist optional vorgesehen, dass zusätzlich zum Schritt S2, ein weiterer Schritt S21 erfolgt, nämlich ein Bestimmen einer Netzcharakteristik, die einen Aufbau des elektrischen Versorgungsnetzes charakterisiert, wobei das Vorgeben des Wirkleistungsdämpfungs-signals $\Delta P$ bzw. des Blindleistungsdämpfungssignals $\Delta Q$ zusätzlich in Abhängigkeit der bestimmten Netzcharakteristik erfolgt. Diese zusätzliche optionale Variante ist mit dem gestrichelten Pfeil in der Figur 5 dargestellt. Somit wird bei der Einspeisung der Wirk- und Blindleistung zum Bedämpfen der niederfrequenten Schwingungen auch der Aufbau bzw. die Eigenschaften des elektrischen Netzes durch die Netzcharakteristik berücksichtigt.

Zusammengefasst wird somit vorgeschlagen, Oszillationen bzw. niederfrequente Schwingungen durch ein zusätzliches Verfahren zu detektieren und Dämpfungssignale $\Delta P$ und $\Delta Q$ in Abhängigkeit der Schwingungs- und optional Netzeigenschaften des Systems bzw. des elektrischen Netzes zu generieren. Dabei wird besonders ausgenutzt, dass eine unterschiedliche Beeinflussbarkeit der Schwingungsarten durch P & Q gegeben ist. Besonders wird das Regelungsziel verfolgt, ein Verfahren zur Dämpfung von so genannten Power-Systems-Oscillations auf Windenergie- oder Windparkebene mittels gezielter Wirk- und Blindleistungseinspeisung ($\Delta P$- und $\Delta Q$-Dämpfungssignale) umzusetzen.

Mit dem vorgeschlagenen Verfahren erfolgt somit ein Bestimmen des Schwingungssignals, wobei insbesondere die Frequenz und Phasenlage des niederfrequenten Schwingungssignals erfasst werden. Dabei wird eine Schwingungscharakteristik bestimmt. Es werden anschließend geeignete Dämpfungssignale entsprechend der Schwingungscharakteristik und zusätzlich oder alternativ entsprechend einer Netzcharakteristik erzeugt. Die Netzcharakteristik kann dabei mittels einer Netzsensitivitätsanalyse, die eine Bestimmung der Reaktion einer Einspeisung $\Delta P$ & $\Delta Q$ darstellt erfolgen, oder mittels analytischer Methoden wie zum Beispiel einer Netztopologie oder Schwingungsfrequenzanalyse. Darauf basierend erfolgt anschließend eine Einspeisung der Dämpfungssignale durch die Windenergieanlage.

Das Verfahren gemäß den zuvor beschrieben Ausführungsformen ermöglicht dabei, eine Dämpfung von niederfrequenten Schwingungen und einen stabileren Netzbetrieb, ohne zusätzliche Auslastung von Netzanlagen. Zudem kann eine Erhöhung der Akzeptanz umrichtergespeister Einspeisetechnologie durch Verbesserung der Systemsicherheit erreicht werden und die Risiken durch niederfrequente Oszillationen in Energieübertragungssystemen durch Windkraftwerke minimiert werden.

**Patentansprüche**

1. Verfahren zum Steuern eines Windparks (112) zum Bedämpfen niederfrequenter elektrischer Schwingungen, insbesondere subsynchroner Resonanzen, in einem elektrischen Versorgungsnetz (306), wobei das Versorgungsnetz (306) eine Netzspannung mit einer Netznennfrequenz aufweist und einen Arbeitspunkt aufweist, der durch Lastflüsse gekennzeichnet ist, wobei der Windpark (112) wenigstens eine an das elektrische Versorgungsnetz (306) angeschlossene Windenergieanlage (100, 300) aufweist, umfassend die Schritte:

   - Erfassen wenigstens einer niederfrequenten elektrischen Schwingung des elektrischen Versorgungsnetzes,
   - Bestimmen jeweils einer Schwingungscharakteristik der wenigstens einen erfassten Schwingung, wobei die Schwingungscharakteristik wenigstens eine Eigenschaft der erfassten Schwingung beschreibt, und das Bestimmen der Schwingungscharakteristik ein Bestimmen einer Schwingungsart beinhaltet;
   - Vorgeben eines Wirkleistungsdämpfungssignals ($\Delta P$) und/oder eines Blindleistungsdämpfungssignals ($\Delta Q$) jeweils zum Bedämpfen der wenigstens einen durch die Schwingungscharakteristik charakterisierten niederfrequenten Schwingung;
   - Einspeisen eines Wirkleistungsanteils entsprechend des Wirkleistungsdämpfungssignals bzw. eines Blindleistungsanteils entsprechend des Blindleistungsdämpfungssignals, wobei das Einspeisen des Wirkleistungsanteils und/oder des Blindleistungsanteils in das elektrische Versorgungsnetz (306) so erfolgt, dass Lastflüsse im Versorgungsnetz (306) geändert werden, um den Arbeitspunkt des elektrischen Versorgungsnetzes zu verändern, und wobei

      - das Vorgeben des Wirkleistungsdämpfungssignals ($\Delta P$) bzw. des Blindleistungsdämpfungssignals ($\Delta Q$) in Abhängigkeit der bestimmten Schwingungscharakteristik erfolgt, und
      - die jeweilige Schwingungsart der erfassten niederfrequenten Schwingung im elektrischen Netz berücksichtigt wird, um eine daran angepasste Einspeisung vorzunehmen, wobei
      - ein Bedämpfen niederfrequenter Schwingungen in Abhängigkeit der Schwingungsart unterschiedlich über die Wirk- bzw. Blindleistungseinspeisung beeinflusst wird.

2. Verfahren nach Anspruch 1, **dadurch gekennzeichnet, dass**, zusätzlich der Verfahrensschritt ausgeführt wird:

   - Bestimmen einer Netzcharakteristik, die einen Aufbau des elektrischen Versorgungsnetzes charakterisiert, wobei das Vorgeben des Wirkleistungsdämpfungssignals ($\Delta P$) bzw. des Blindleistungsdämpfungssignals ($\Delta Q$) zusätzlich in Abhängigkeit der bestimmten Netzcharakteristik erfolgt.

3. Verfahren nach einem der vorstehenden Ansprüche, **dadurch gekennzeichnet, dass** bei dem Bestimmen der Schwingungsart unterschieden wird zwischen den Schwingungsarten

   - Intraplant-Schwingungen, die Schwingungen zwischen mehreren an das elektrische Versorgungsnetz (306) angeschlossenen Erzeugungseinheiten in einem Versorgungsnetzabschnitt bezeichnen,
   - Control-Mode-Schwingungen, die Schwingungen bedingt durch rückkoppelndes Regeln von an das elektrische Versorgungsnetz (306) angeschlossenen Erzeugungseinheiten, Verbrauchereinheiten oder Wandlereinheiten bezeichnen,
   - Interarea-Schwingungen, die Schwingungen zwischen mehreren Versorgungsnetzabschnitten bezeichnen, und
   - Localplant-Schwingungen, die Schwingungen zwischen einer an das elektrische Versorgungsnetz (306) angeschlossenen Erzeugungseinheit mit dem Versorgungsnetz (306) bezeichnen.

4. Verfahren nach einem der vorstehenden Ansprüche, **dadurch gekennzeichnet, dass**

   - das Wirkleistungsdämpfungssignal ($\Delta P$) und das Blindleistungsdämpfungssignal ($\Delta Q$) unabhängig voneinander vorgegeben werden, insbesondere, dass
   - das Wirkleistungsdämpfungssignal durch eine Wirkleistungsdämpfungsfunktion gebildet wird, die wenigstens eine erste Eigenschaft der Schwingungscharakteristik als Eingangssignal erhält und das Wirkleistungsdämpfungssignal als Ausgangssignal ausgibt, und dass

- das Blindleistungsdämpfungssignal durch eine Blindleistungsdämpfungsfunktion gebildet wird, die wenigstens eine zweite Eigenschaft der Schwingungscharakteristik als Eingangssignal erhält und das Blindleistungsdämpfungssignal als Ausgangssignal ausgibt,

und/oder

- das Wirkleistungsdämpfungssignal ($\Delta P$) und das Blindleistungsdämpfungssignal ($\Delta Q$) unabhängig von einem Wirkleistungssollwert bzw. Blindleistungssollwert ($P_{FCU}$, $Q_{FCU}$) eines Windparkreglers vorgegeben werden, und
- der eingespeiste Wirkleistungsanteil bzw. der eingespeiste Blindleistungsanteil so eingespeist werden, dass unterschiedliche niederfrequente Schwingungsarten unabhängig voneinander bedämpft werden.

5. Verfahren nach einem der vorstehenden Ansprüche, **dadurch gekennzeichnet, dass**, das Bestimmen einer Schwingungscharakteristik mittels

- einer FFT-Analyse,
- einer Wavelet-Analyse, und/oder
- einer Gradienten-Analyse durchgeführt wird.

6. Verfahren nach einem der vorstehenden Ansprüche, **dadurch gekennzeichnet, dass**,

- das Wirkleistungsdämpfungssignal ($\Delta P$) zum Bedämpfen von Interarea-Schwingungen oder Control-Mode-Schwingungen vorgegeben wird,
und/oder
- das Blindleistungsdämpfungssignal ($\Delta Q$) zum Bedämpfen von Intraplant-Schwingungen, Localplant-Schwingungen, Interarea-Schwingungen oder Control-Mode-Schwingungen vorgegeben wird,
und/oder
- der Wirkleistungsanteil bzw. der Blindleistungsanteil entsprechend der bestimmten Schwingungscharakteristik für eine vorgegebene Zeitdauer

    - erhöht eingespeist wird,
    - reduziert eingespeist wird,
    - pulsweise erhöht oder reduziert eingespeist wird,
    - in einer alternierenden Impulsfolge abwechselnd erhöht und reduziert eingespeist wird und/oder
    - rampenförmig ansteigend oder abfallend eingespeist wird.

7. Verfahren nach einem der vorstehenden Ansprüche, **dadurch gekennzeichnet, dass**

- die Schwingungscharakteristik wenigstens eine Eigenschaft ist oder umfasst aus der Liste aufweisend:

    - eine Phasenlage ($\varphi_{Grid}$) des Schwingungssignals,
    - eine Schwingungsamplitude des Schwingungssignals,
    - ein charakteristisches Frequenzspektrum der niederfrequenten Schwingungen, und
    - ein Ort an dem das Schwingungssignals detektiert wurde.

8. Verfahren nach einem der vorstehenden Ansprüche, **dadurch gekennzeichnet, dass**

- die Netzcharakteristik des elektrischen Versorgungsnetzes (306) wenigstens eine Eigenschaft ist oder umfasst aus der Liste aufweisend:

    - eine Netzfrequenz ($f_{Grid}$) einer Netzspannung,
    - eine Netzsensitivität, die eine Änderung der Spannung am Netzanschlusspunkt (304) bezogen auf eine Änderung der eingespeisten Leistung beschreibt,
    - eine Netztopologie, die den konstruktiven Aufbau des Netzes beschreibt und/oder eine Art, eine Anzahl und einen Anschlussort von angeschlossenen Verbraucher und Erzeuger im Netz (306) beschreibt,
    - eine Netzimpedanz, insbesondere am Netzanschlusspunkt (304),
    - ein Kurzschlussstromverhältnis, insbesondere am Netzanschlusspunkt (304).

9. Verfahren nach einem der vorstehenden Ansprüche, **dadurch gekennzeichnet, dass**

wenigstens eine Netzcharakteristik mittels eines Analyseverfahrens bestimmt wird aus der Liste aufweisend:

- eine Netzsensitivitätsanalyse zur Bestimmung der Netzsensitivität, wobei die Netzsensitivitätsanalyse vorzugsweise die Schritte umfasst:

- Ändern der eingespeisten Wirkleistung (P) und/oder der eingespeisten Blindleistung (Q) und
- Bestimmen einer Frequenzreaktion oder Amplitudenreaktion der Spannung am Netzanschlusspunkt (304) auf die Änderung der eingespeisten Wirkleistung (P) und/oder Blindleistung (Q), insbesondere durch Berechnung einer partiellen Ableitung der Spannung nach der Wirkleistung (P) und/oder einer partiellen Ableitung der Spannung nach der Blindleistung (Q),

- eine Netztopologieanalyse zur Bestimmung der Netztopologie, wobei die Netztopologieanalyse vorzugsweise wenigstens einen der Schritte umfasst aus der Liste aufweisend:

- Ermitteln eines Aufbaus und einer Ausdehnung des elektrischen Netzes anhand von Netzplänen oder Entfernungsmessungen,
- Ermitteln einer Netzimpedanz zwischen zwei Punkten im elektrischen Versorgungsnetz (306), insbesondere zwischen einer Windenergieanlage (100, 300) und einem Netzschwerpunkt, wobei der Netzschwerpunkt vorzugsweise einen Netzanschlusspunkt (304) oder Netzbereich beschreibt, an dem wenigstens ein Kraftwerk mit wenigstens einem direkt mit dem elektrischen Versorgungsnetz (306) gekoppelten Synchrongenerator angeschlossen ist, und
- Ermitteln eines Kurzschlussstromverhältnisses anhand von Vorgaben eines Netzbetreibers oder durch Berechnung, und

- eine Netzfrequenzanalyse zur Bestimmung der charakteristischen Frequenz und des charakteristischen Frequenzspektrums.

10. Verfahren nach einem der vorstehenden Ansprüche, **dadurch gekennzeichnet, dass**

- das Wirkleistungsdämpfungssignal (ΔP) als ein moduliertes Signal vorgegeben wird, während das Blindleistungsdämpfungssignal (ΔQ) als konstantes Signal vorgegeben wird, oder dass
- das Blindleistungsdämpfungssignal (ΔQ) als ein moduliertes Signal vorgegeben wird, während das Wirkleistungsdämpfungssignal (ΔP) als konstantes Signal vorgegeben wird.

11. Verfahren nach einem der vorstehenden Ansprüche, wobei

- zum Erfassen wenigstens einer niederfrequenten elektrischen Schwingung des elektrischen Versorgungsnetzes (306), und/oder
- zum Bestimmen jeweils einer Schwingungscharakteristik der wenigstens einen erfassten Schwingung, folgende Schritte vorgesehen sind
- Erfassen wenigstens eines elektrischen Signals des elektrischen Versorgungsnetzes (306) und
- Auswerten des elektrischen Signals mittels einer Wavelet-Analyse, bei der über eine Korrelationsanalyse des erfassten Signals mit einer vorbestimmten Wavelet-Mutterfunktion ein zeitabhängiges Frequenzbild erstellt wird,
- wobei vorzugsweise vom Vorliegen einer niederfrequenten Schwingung ausgegangen wird, wenn
- in dem zeitabhängigen Frequenzbild zusätzlich zu einem Grundanteil wenigstens ein weiterer niederfrequenter Frequenzanteil vorhanden ist.

12. Verfahren nach einem der vorstehenden Ansprüche, **dadurch gekennzeichnet, dass**
ein zeitlicher Verlauf einer Amplitude eines bzw. des wenigstens einen weiteren Frequenzanteils erfasst wird.

13. Verfahren nach einem der vorstehenden Ansprüche, **dadurch gekennzeichnet, dass**
eine bzw. die Wavelet-Mutterfunktion wenigstens eine Eigenschaft aufweist aus der Liste aufweisend die folgenden Eigenschaften:

I) die Wavelet-Mutterfunktion ist dazu vorbereitet, skalierbar zu sein, insbesondere nach der Zeit oder der Frequenz,
II) die Wavelet-Mutterfunktion ist dazu vorbereitet, zeitlich verschiebbar zu sein,
III) die Wavelet-Mutterfunktion weist Lokalität sowohl im Frequenzbereich als auch im Zeitbereich auf,

IV) die Wavelet-Mutterfunktion weist im Zeitbereich ein Integral auf, das 0 ist,
V) als Wavelet-Mutterfunktion wird eine Wavelet-Funktion aus der Liste verwendet, aufweisend:

    a. ein Morlet-Wavelet,
    b. ein Daubechies D20-Wavelet
    c. einen Mexikanischen Hut.

14. Windpark (112) oder Windenergieanlage (100, 300), wobei der Windpark (112) bzw. die Windenergieanlage (100, 300) dazu eingerichtet ist, Wirk- und Blindleistung in ein elektrisches Versorgungsnetz (306) mit einer Netzspannung einzuspeisen, wobei die Netzspannung eine Netznennfrequenz aufweist, und einen Arbeitspunkt aufweist, der durch Lastflüsse gekennzeichnet ist, wobei der Windpark (112) bzw. die Windenergieanlage (100, 300) umfasst:

- eine Messeinrichtung zum Erfassen wenigstens einer niederfrequenten elektrischen Schwingung im elektrischen Versorgungsnetzes (306),
- eine Erkennungseinrichtung zum Bestimmen jeweils einer Schwingungscharakteristik der wenigstens einen erfassten Schwingung, wobei die Schwingungscharakteristik wenigstens eine Eigenschaft der erfassten Schwingung beschreibt, und das Bestimmen der Schwingungscharakteristik ein Bestimmen einer Schwingungsart beinhaltet;
- eine Steuereinrichtung zum Vorgeben eines Wirkleistungsdämpfungssignals ($\Delta$P) und/oder eines Blindleistungsdämpfungssignals ($\Delta$Q), und
- eine Einspeiseeinrichtung zum Einspeisen eines Wirkleistungsanteils entsprechend des Wirkleistungsdämpfungssignals bzw. eines Blindleistungsanteils entsprechend des Blindleistungsdämpfungssignals, wobei das Einspeisen des Wirkleistungsanteils und/oder des Blindleistungsanteils in das elektrische Versorgungsnetz (306) so erfolgt, dass Lastflüsse im Versorgungsnetz (306) geändert werden, um den Arbeitspunkt des elektrischen Versorgungsnetzes zu verändern, und wobei
- die Steuereinrichtung dazu vorbereitet ist, dass das Vorgeben des Wirkleistungsdämpfungssignals ($\Delta$P) bzw. des Blindleistungsdämpfungssignals ($\Delta$Q) in Abhängigkeit der bestimmten Schwingungscharakteristik erfolgt, und
- die jeweilige Schwingungsart der erfassten niederfrequenten Schwingung im elektrischen Netz berücksichtigt wird, um eine daran angepasste Einspeisung vorzunehmen, wobei
- ein Bedämpfen niederfrequenter Schwingungen in Abhängigkeit der Schwingungsart unterschiedlich über die Wirk- bzw. Blindleistungseinspeisung beeinflusst wird.

15. Windpark (112) oder Windenergieanlage (100, 300) nach Anspruch 14, **dadurch gekennzeichnet, dass** die Windenergieanlage (100, 300) bzw. der Windpark (112), insbesondere die Steuerungseinrichtung, dazu eingerichtet ist, ein Verfahren gemäß einem der Ansprüche 1-13 auszuführen.

**Claims**

1. A method for controlling a wind farm (112) for damping low-frequency electrical oscillations, in particular subsynchronous resonances, in an electrical supply grid (306), wherein the supply grid (306) has a line voltage with a nominal line frequency and an operating point which is **characterized by** load flows, wherein the wind farm (112) has at least one wind power installation (100, 300) connected to the electrical supply grid (306), comprising the steps:

- detecting at least one low-frequency electrical oscillation of the electrical supply grid,
- determining in each case an oscillation characteristic of the at least one detected oscillation, wherein the oscillation characteristic describes at least one property of the detected oscillation, and determining an oscillation characteristic includes determining an oscillation mode;
- specifying an active power damping signal ($\Delta$P) and/or a reactive power damping signal ($\Delta$Q) in each case for damping the at least one low-frequency oscillation **characterized by** the oscillation characteristic;
- feeding an active power component in accordance with the active power damping signal or a reactive power component in accordance with the reactive power damping signal, wherein feeding the active power component and/or the reactive power component into the electrical supply grid (306) takes place in such a way that load flows in the supply grid (306) are changed in order to change the operating point of the electrical supply grid, and wherein

    - specifying the active power damping signal ($\Delta$P) or the reactive power damping signal ($\Delta$Q) takes place

depending on the determined oscillation characteristic, and

- the respective oscillation mode of the detected low-frequency oscillation in the electrical grid is taken into account in order to carry out a feed-in which is adapted to this, wherein

- a damping of low-frequency oscillations is influenced differently via the active or reactive power feed-in depending on the oscillation mode.

2. The method as claimed in claim 1, **characterized in that** the method step is additionally carried out:

- determining a network characteristic which characterizes a structure of the electrical supply grid, wherein specifying the active power damping signal ($\Delta$P) or the reactive power damping signal ($\Delta$Q) additionally takes place depending on the determined network characteristic.

3. The method as claimed in one of the preceding claims, **characterized in that**
when determining the oscillation mode a distinction is made between the oscillation modes

- intraplant oscillations, which refer to oscillations between a plurality of production units connected to the electrical supply grid (306) in one supply grid section,
- control mode oscillations, which refer to oscillations caused by feedback control of production units, consumer units or transducer units connected to the electrical supply grid (306),
- interarea oscillations, which refer to oscillations between a plurality of supply grid sections, and
- local plant oscillations, which refer to oscillations between a production unit connected to the electrical supply grid (306) with the supply grid (306).

4. The method as claimed in one of the preceding claims, **characterized in that**

- the active power damping signal ($\Delta$P) and the reactive power damping signal ($\Delta$Q) are specified independently of one another, in particular **in that**
- the active power damping signal is formed by an active power damping function which receives at least one first property of the oscillation characteristic as an input signal and outputs the active power damping signal as an output signal, and **in that**
- the reactive power damping signal is formed by a reactive power damping function which receives at least one second property of the oscillation characteristic as an input signal and outputs the reactive power damping signal as an output signal,
and/or
- the active power damping signal ($\Delta$P) and the reactive power damping signal ($\Delta$Q) are specified independently of an active power set point or reactive power set point ($P_{FCU}$, $Q_{FCU}$) of a wind farm controller, and
- the fed active power component or the fed reactive power component are fed in such a way that different low-frequency oscillation modes are damped independently of one another.

5. The method as claimed in one of the preceding claims, **characterized in that** determining an oscillation characteristic is carried out by means of

- an FFT analysis,
- a wavelet analysis, and/or
- a gradient analysis.

6. The method as claimed in one of the preceding claims, **characterized in that**

- the active power damping signal ($\Delta$P) is specified for damping interarea oscillations or control mode oscillations,

and/or

- the reactive power damping signal ($\Delta$Q) is specified for damping intraplant oscillations, local plant oscillations, interarea oscillations or control mode oscillations,
and/or
- the active power component or the reactive power component, in accordance with the determined oscillation characteristic, for a specified period of time,

- is fed at an increased rate,
- is fed at a reduced rate,
- is fed at an increased or reduced rate in a pulsed manner,
- is fed at an increased and reduced rate alternately in an alternating pulse sequence and/or
- is fed in a ramp-shaped manner rising or falling.

7. The method as claimed in one of the preceding claims, **characterized in that**

- the oscillation characteristic is or comprises at least one property from the list including:

- a phase position ($\varphi_{Grid}$) of the oscillation signal,
- an oscillation amplitude of the oscillation signal,
- a characteristic frequency spectrum of the low-frequency oscillations, and
- a location at which the oscillation signal has been detected.

8. The method as claimed in one of the preceding claims, **characterized in that**

- the network characteristic of the electrical supply grid (306) is or comprises at least one property from the list including:

- a line frequency ($f_{Grid}$) of a line voltage,
- a network sensitivity which describes a change in the voltage at the network connection point (304) relating to a change in the power fed,
- a network topology which describes the constructive structure of the grid and/or describes a type, a number and a point of connection of connected consumers and generators in the grid (306),
- a line impedance, in particular at the network connection point (304),
- a short circuit current ratio, in particular at the network connection point (304).

9. The method as claimed in one of the preceding claims, **characterized in that** at least one network characteristic is determined by means of an analysis method from the list including:

- a network sensitivity analysis for determining the network sensitivity, wherein the network sensitivity analysis preferably comprises the steps:

- changing the fed active power (P) and/or the fed reactive power (Q) and
- determining a frequency response or amplitude response of the voltage at the network connection point (304) to the change in the fed active power (P) and/or reactive power (Q), in particular by calculating a partial derivative of the voltage according to the active power (P) and/or a partial derivative of the voltage according to the reactive power (Q),

- a network topology analysis for determining the network topology, wherein the network topology analysis comprises preferably at least one of the steps from the list including:

- establishing a structure and an extension of the electrical grid based on network diagrams or distance measurements,
- establishing a line impedance between two points in the electrical supply grid (306), in particular between a wind power installation (100, 300) and a network core area, wherein the network core area preferably describes a network connection point (304) or network area to which at least one power station with at least one synchronous generator directly coupled with the electrical supply grid (306) is connected, and
- establishing a short circuit current ratio based on specifications of a grid operator or by calculation, and

- a line frequency analysis for determining the characteristic frequency and the characteristic frequency spectrum.

10. The method as claimed in one of the preceding claims, **characterized in that**

- the active power damping signal ($\Delta P$) is specified as a modulated signal, while the reactive power damping signal ($\Delta Q$) is specified as a constant signal, or **in that**
- the reactive power damping signal ($\Delta Q$) is specified as a modulated signal, while the active power damping signal (ΔP) is specified as a constant signal.

11. The method as claimed in one of the preceding claims, wherein

- for detecting at least one low-frequency electrical oscillation of the electrical supply grid (306), and/or
- for determining in each case an oscillation characteristic of the at least one detected oscillation, the following steps are provided
- detecting at least one electrical signal of the electrical supply grid (306) and
- evaluating the electrical signal by means of a wavelet analysis in which a time-dependent frequency picture is created via a correlation analysis of the detected signal with a predetermined wavelet mother function,
- wherein preferably the presence of a low-frequency oscillation is assumed if
- at least one further low-frequency frequency component is present in the time-dependent frequency picture in addition to a basic component.

12. The method as claimed in one of the preceding claims, **characterized in that** a temporal course of an amplitude of a or the at least one further frequency component is detected.

13. The method as claimed in one of the preceding claims, **characterized in that** a or the wavelet mother function has at least one property from the list including the following properties:

I) the wavelet mother function is prepared to be scalable, in particular according to time or frequency,
II) the wavelet mother function is prepared to be temporally shiftable,
III) the wavelet mother function has locality both in the frequency range and in the time range,
IV) the wavelet mother function has an integral in the time range which is 0,
V) a wavelet function is used as a wavelet mother function from the list including:

a. a Morlet wavelet,
b. a Daubechies D20 wavelet
c. a Mexican hat.

14. A wind farm (112) or wind power installation (100, 300), wherein the wind farm (112) or the wind power installation (100, 300) is set up to feed active and reactive power into an electrical supply grid (306) with a line voltage, wherein the line voltage has a nominal line frequency, and an operating point which is **characterized by** load flows, wherein the wind farm (112) or the wind power installation (100, 300) comprises:

- a measuring device for detecting at least one low-frequency electrical oscillation in the electrical supply grid (306),
- an identification device for determining in each case an oscillation characteristic of the at least one detected oscillation, wherein the oscillation characteristic describes at least one property of the detected oscillation, and determining an oscillation characteristic includes determining an oscillation mode;
- a control device for specifying an active power damping signal (ΔP) and/or a reactive power damping signal (ΔQ), and
- a feed-in device for feeding an active power component in accordance with the active power damping signal or a reactive power component in accordance with the reactive power damping signal, wherein feeding the active power component and/or the reactive power component into the electrical supply grid (306) takes place in such a way that load flows in the supply grid (306) are changed in order to change the operating point of the electrical supply grid, and wherein
- the control device is prepared to specify the active power damping signal (ΔP) or the reactive power damping signal (ΔQ) depending on the determined oscillation characteristic, and

- the respective oscillation mode of the detected low-frequency oscillation in the electrical grid is taken into account in order to carry out a feed-in which is adapted to this, wherein
- a damping of low-frequency oscillations is influenced differently via the active or reactive power feed-in depending on the oscillation mode.

15. The wind farm (112) or wind power installation (100, 300) as claimed in claim 14, **characterized in that** the wind power installation (100, 300) or the wind farm (112), in particular the control device, is set up to perform a method as claimed in one of claims 1-13.

**Revendications**

1. Procédé pour commander un parc éolien (112) pour atténuer des oscillations électriques basse fréquence, en particulier des résonances sous-synchrones, dans un réseau d'alimentation (306) électrique, dans lequel le réseau d'alimentation (306) présente une tension de réseau avec une fréquence nominale de réseau et présente un point de travail qui est **caractérisé par** des flux de charge, dans lequel le parc éolien (112) présente au moins une éolienne (100, 300) raccordée au réseau d'alimentation (306) électrique, comprenant les étapes :

  - de détection d'au moins une oscillation électrique basse fréquence du réseau d'alimentation électrique,
  - de détermination de respectivement une caractéristique d'oscillation de la au moins une oscillation détectée, dans lequel la caractéristique d'oscillation décrit au moins une propriété de l'oscillation détectée, et la détermination de la caractéristique d'oscillation comporte une détermination d'un type d'oscillation ;
  - de prédéfinition d'un signal d'atténuation de puissance active (ΔP) et/ou d'un signal d'atténuation de puissance réactive (ΔQ) respectivement pour atténuer la au moins une oscillation basse fréquence **caractérisée par** la caractéristique d'oscillation ;
  - d'injection d'une composante de puissance active conformément au signal d'atténuation de puissance active ou d'une composante de puissance réactive conformément au signal d'atténuation de puissance réactive, dans lequel l'injection de la composante de puissance active et/ou de la composante de puissance réactive dans le réseau d'alimentation (306) électrique s'effectue de sorte que les flux de charge dans le réseau d'alimentation (306) sont modifiés, afin de changer le point de travail du réseau d'alimentation électrique, et dans lequel
  - la prédéfinition du signal d'atténuation de puissance active (ΔP) ou du signal d'atténuation de puissance réactive (ΔQ) s'effectue en fonction de la caractéristique d'oscillation déterminée, et
  - le type d'oscillation respectif de l'oscillation basse fréquence détectée dans le réseau électrique est pris en compte, afin de réaliser une injection adaptée à celui-ci, dans lequel
  - une atténuation d'oscillations basse fréquence est influencée de manière différente par l'intermédiaire de l'injection de puissance active ou réactive en fonction du type d'oscillation.

2. Procédé selon la revendication 1, **caractérisé en ce que** l'étape de procédé est exécutée en plus :

  - la détermination d'une caractéristique de réseau, qui caractérise une structure du réseau d'alimentation électrique, dans lequel la prédéfinition du signal d'atténuation de puissance active (ΔP) ou du signal d'atténuation de puissance réactive (ΔQ) s'effectue en plus en fonction de la caractéristique de réseau déterminée.

3. Procédé selon l'une quelconque des revendications précédentes, **caractérisé en ce que**, lors de la détermination du type d'oscillation, une distinction est faite entre les types d'oscillation

  - oscillations intra-installations, qui désignent des oscillations entre plusieurs unités de production raccordées au réseau d'alimentation (306) électrique dans une section de réseau d'alimentation,
  - oscillations de mode de contrôle, qui désignent les oscillations provoquées par une régulation à rétroaction d'unités de production raccordées au réseau d'alimentation (306) électrique, d'unités de consommateur ou d'unités de convertisseur,
  - oscillations interzone, qui désignent les oscillations entre plusieurs sections de réseau d'alimentation, et
  - oscillations locales, qui désignent les oscillations entre une unité de production raccordée au réseau d'alimentation (306) électrique avec le réseau d'alimentation (306).

4. Procédé selon l'une quelconque des revendications précédentes, **caractérisé en ce que**

  - le signal d'atténuation de puissance active (ΔP) et le signal d'atténuation de puissance réactive (ΔQ) sont prédéfinis indépendamment l'un de l'autre, en particulier que
  - le signal d'atténuation de puissance active est formé par une fonction d'atténuation de puissance active, qui obtient au moins une première propriété de la caractéristique d'oscillation en tant que signal d'entrée et émet le signal d'atténuation de puissance active en tant que signal de sortie, et que
  - le signal d'atténuation de puissance réactive est formé par une fonction d'atténuation de puissance réactive, qui obtient au moins une deuxième propriété de la caractéristique d'oscillation en tant que signal d'entrée et le signal d'atténuation de puissance réactive en tant que signal de sortie
  et/ou
  - le signal d'atténuation de puissance active (ΔP) et le signal d'atténuation de puissance réactive (ΔQ) sont prédéfinis indépendamment d'une valeur de consigne de puissance active ou valeur de consigne de puissance réactive ($P_{FCU}$, $Q_{FCU}$) d'un régulateur de parc éolien, et
- la composante de puissance active injectée ou la composante de puissance réactive injecté sont injectées de sorte que différents types d'oscillations basse fréquence sont atténués indépendamment les uns des autres.

5. Procédé selon l'une quelconque des revendications précédentes, **caractérisé en ce que**
la détermination d'une caractéristique d'oscillation est mise en œuvre au moyen

- d'une analyse FFT,
- d'une analyse d'ondelette, et/ou
- d'une analyse de gradient.

6. Procédé selon l'une quelconque des revendications précédentes, **caractérisé en ce que**

- le signal d'atténuation de puissance active ($\Delta P$) est prédéfini pour atténuer des oscillations interzone ou oscillations de mode de contrôle,
et/ou
- le signal d'atténuation de puissance réactive ($\Delta Q$) est prédéfini pour atténuer des oscillations intra-installations, des oscillations locales, des oscillations interzone ou des oscillations de mode de contrôle,
et/ou
- la composante de puissance active ou la composante de puissance réactive conformément à la caractéristique d'oscillation déterminée pendant une durée prédéfinie

- est injectée de manière augmentée,
- est injectée de manière réduite,
- est injectée de manière augmentée ou réduite par impulsions,
- est injectée à tour de rôle de manière augmentée et réduite dans une succession d'impulsions alternée et/ou
- est injectée de manière montante ou descendante en rampe.

7. Procédé selon l'une quelconque des revendications précédentes, **caractérisé en ce que**

- la caractéristique d'oscillation est ou comprend au moins une propriété dans la liste présentant :

- une position de phase ($\varphi_{Grid}$) du signal d'oscillation,
- une amplitude d'oscillation du signal d'oscillation,
- un spectre de fréquence caractéristique des oscillations basse fréquence, et
- un emplacement auquel le signal d'oscillation avait été détecté.

8. Procédé selon l'une quelconque des revendications précédentes, **caractérisé en ce que**

- la caractéristique de réseau du réseau d'alimentation (306) électrique est ou comprend au moins une propriété dans la liste présentant :

-- une fréquence de réseau ($f_{Grid}$) d'une tension de réseau,
-- une sensibilité de réseau, qui décrit une modification de la tension sur le point de raccordement au réseau (304) par rapport à une modification de la puissance injectée,
-- une topologie de réseau, qui décrit la structure de conception du réseau et/ou décrit un type, un nombre et un emplacement de raccordement de consommateurs et producteurs raccordés dans le réseau (306),
-- une impédance de réseau, en particulier sur le point de raccordement au réseau (304),
-- un rapport de courant de court-circuit, en particulier sur le point de raccordement au réseau (304).

9. Procédé selon l'une quelconque des revendications précédentes, **caractérisé en ce que**
au moins une caractéristique de réseau est déterminée au moyen d'un procédé d'analyse dans la liste présentant :

- une analyse de sensibilité de réseau pour la détermination de la sensibilité de réseau, dans lequel l'analyse de sensibilité de réseau comprend de préférence les étapes :

-- de modification de la puissance active (P) injectée et/ou de la puissance réactive (Q) injectée et
-- de détermination d'une réaction de fréquence ou réaction d'amplitude de la tension sur le point de raccordement au réseau (304) à la modification de la puissance active (P) et/ou puissance réactive (Q) injectée, en particulier par calcul d'une dérivation partielle de la tension selon la puissance active (P) et/ou d'une dérivation partielle de la tension selon la puissance réactive (Q),

- une analyse de topologie de réseau pour la détermination de la topologie de réseau, dans lequel l'analyse de topologie de réseau comprend de préférence au moins l'une des étapes dans la liste présentant :

-- la détermination d'une structure et d'une étendue du réseau électrique sur la base de plans de réseau ou de mesures de distance,
-- la détermination d'une impédance de réseau entre deux points dans le réseau d'alimentation (306) électrique, en particulier entre une éolienne (100, 300) et un centre de réseau, dans lequel le centre de réseau décrit de préférence un point de raccordement au réseau (304) ou une zone de réseau, auquel/à laquelle est raccordée au moins une centrale électrique avec au moins un générateur synchrone couplé directement au réseau d'alimentation (306) électrique, et
-- la détermination d'un rapport de courant de court-circuit sur la base de prédéfinitions d'un opérateur du réseau ou par calcul, et

- une analyse de fréquence de réseau pour la détermination de la fréquence caractéristique et du spectre de fréquence caractéristique.

**10.** Procédé selon l'une quelconque des revendications précédentes, **caractérisé en ce que**

- le signal d'atténuation de puissance active (ΔP) est prédéfini en tant que signal modulé, tandis que le signal d'atténuation de puissance réactive (ΔQ) est prédéfini en tant que signal constant, ou que
- le signal d'atténuation de puissance réactive (ΔQ) est prédéfini en tant que signal modulé, tandis que le signal d'atténuation de puissance active (ΔP) est prédéfini en tant que signal constant.

**11.** Procédé selon l'une quelconque des revendications précédentes, dans lequel

- pour la détection d'au moins une oscillation électrique basse fréquence du réseau d'alimentation (306) électrique, et/ou
- pour la détermination de respectivement une caractéristique d'oscillation de la au moins une oscillation détectée, les étapes suivantes sont prévues
- la détection d'au moins un signal électrique du réseau d'alimentation (306) électrique et
- l'évaluation du signal électrique au moyen d'une analyse d'ondelette, pour laquelle une image de fréquence dépendante du temps est élaborée par l'intermédiaire d'une analyse de corrélation du signal détecté avec une fonction mère d'ondelette prédéterminée,
- dans lequel de préférence il est présupposé de la présence d'une oscillation basse fréquence quand
- au moins une autre composante de fréquence basse fréquence est présente en plus d'une composante de base dans l'image de fréquence dépendante du temps.

**12.** Procédé selon l'une quelconque des revendications précédentes, **caractérisé en ce que** une variation dans le temps d'une amplitude d'une ou de la au moins une autre composante de fréquence est détectée.

**13.** Procédé selon l'une quelconque des revendications précédentes, **caractérisé en ce que** une ou la fonction mère d'ondelette présente au moins une propriété dans la liste présentant les propriétés suivantes :

I) la fonction mère d'ondelette est destinée à pouvoir être mise à l'échelle, en particulier selon le temps ou la fréquence,
II) la fonction mère d'ondelette est destinée à pouvoir être décalée dans le temps,
III) la fonction mère d'ondelette présente une localité aussi bien dans le domaine fréquentiel que dans le domaine temporel,
IV) la fonction mère d'ondelette présente dans le domaine temporel une intégrale, qui est 0,
V) en tant que fonction mère d'ondelette une fonction d'ondelette est utilisée dans la liste, présentant :

a. une ondelette de Morlet,
b. une ondelette D20 de Daubechies

c. un chapeau mexicain.

**14.** Parc éolien (112) ou éolienne (100, 300), dans lequel le parc éolien (112) ou l'éolienne (100, 300) est conçu(e) pour injecter une puissance active et réactive dans un réseau d'alimentation (306) électrique avec une tension de réseau, dans lequel la tension de réseau présente une fréquence nominale de réseau, et présente un point de travail, qui est **caractérisé par** des flux de charge, dans lequel le parc éolien (112) ou l'éolienne (100, 300) comprend :

- un dispositif de mesure pour détecter au moins une oscillation électrique basse fréquence dans le réseau d'alimentation (306) électrique,
- un dispositif de reconnaissance pour déterminer respectivement une caractéristique d'oscillation de la au moins une oscillation détectée, dans lequel la caractéristique d'oscillation décrit au moins une propriété de l'oscillation détectée, et la détermination de la caractéristique d'oscillation comporte une détermination d'un type d'oscillation ;
- un dispositif de commande pour prédéfinir un signal d'atténuation de puissance active ($\Delta$P) et/ou un signal d'atténuation de puissance réactive ($\Delta$Q), et
- un dispositif d'injection pour injecter une composante de puissance active conformément au signal d'atténuation de puissance active ou une composante de puissance réactive conformément au signal d'atténuation de puissance réactive, dans lequel l'injection de la composante de puissance active et/ou de la composante de puissance réactive s'effectue dans le réseau d'alimentation (306) électrique, de sorte que les flux de charge dans le réseau d'alimentation (306) sont modifiés, afin de changer le point de travail du réseau d'alimentation électrique, et dans lequel
- le dispositif de commande est destiné à ce que la prédéfinition du signal d'atténuation de puissance active ($\Delta$P) ou du signal d'atténuation de puissance réactive ($\Delta$Q) s'effectue en fonction de la caractéristique d'oscillation déterminée, et
- le type d'oscillation respectif de l'oscillation basse fréquence détectée dans le réseau électrique est pris en compte, afin de réaliser une injection adaptée à celui-ci, dans lequel
- une atténuation d'oscillations basse fréquence est influencée de manière différente par l'intermédiaire de l'injection de puissance active ou réactive en fonction du type d'oscillation.

**15.** Parc éolien (112) ou éolienne (100, 300) selon la revendication 14, caractérisé(e) en ce que l'éolienne (100, 300) ou le parc éolien (112), en particulier le dispositif de commande, est conçu pour exécuter un procédé selon l'une quelconque des revendications 1-13.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013208410 A1
- US 20130204557 A1
- CN 105226679 A
- US 2013176751 A1
- WO 2005088802 A1
- WO 2010060451 A1

- DE 102012212366 A1
- EP 3322060 A1
- CN 105515018 A
- DE 102016101468 A1
- WO 2014012789 A1
- DE 102016010468 A1

**In der Beschreibung aufgeführte Nicht-Patentliteratur**

- Subsynchrone Resonanz ist ein elektrischer Systemzustand, in dem ein Energieaustausch zwischen einem elektrischen Netz und einem Generatorsatz bei einer oder mehreren Eigenfrequenzen des kombinierten Systems stattfindet, die unterhalb der synchronen Frequenz des Systems liegen. **P.M. ANDERSON ; B.L. AGRAWAL ; J.E. VAN NESS.** Subsynchronous Resonance in Power Systems. IEEE Press, 1990